# EUROPÄISCHE PATENTANMELDUNG

(11) **EP 4 201 697 A1**
(43) Veröffentlichungstag der Anmeldung: **28.06.2023**
(21) Anmeldenummer: 21217444.5
(22) Anmeldetag: 23.12.2021
(51) Int. Cl.: B44C 5/04

(54) **VERFAHREN ZUR HERSTELLUNG EINES DEKORIERTEN WAND- ODER BODENPANEELS**

(71) Anmelder: Akzenta Paneele + Profile GmbH, 56759 Kaisersesch (DE)
(72) Erfinder: WENDLING, Peter, 56290 Mörsdorf (DE); HANNIG, Hans-Jürgen, 51427 Bergisch Gladbach (DE)
(74) Vertreter: Michalski Hüttermann & Partner Patentanwälte mbB

(57) **Zusammenfassung**

Die vorliegende Erfindung betrifft ein Verfahren zur Herstellung eines dekorierten Wand- oder Bodenpaneels, aufweisend die Verfahrensschritte:
a) Bereitstellen einer ersten geschmolzenen Polymermasse und einer zweiten geschmolzenen Polymermasse;
b) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
c) Austreiben der schichtweise übereinandergelegten geschmolzenen Polymermassen durch eine Düse;
d) Kalibrieren der schichtweise übereinandergelegten geschmolzenen Polymermassen unter Ausbildung eines plattenförmigen Trägers aufweisend zumindest eine Trägerschicht umfassend die erste Polymermasse und eine die Trägerschicht kontaktierende siegelfähige Schicht umfassend die zweite Polymermasse. Ferner betrifft die Erfindung derart hergestellte plattenförmige Träger und Dekorpaneele, sowie eine Vorrichtung zur Durchführung des Verfahrens.

## Beschreibung

Die vorliegende Erfindung betrifft ein Verfahren zur Herstellung eines dekorierten Wand- oder Bodenpaneels, aufweisend die Verfahrensschritte:
a) Bereitstellen einer ersten geschmolzenen Polymermasse und einer zweiten geschmolzenen Polymermasse;
b) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
c) Austreiben der schichtweise übereinandergelegten geschmolzenen Polymermassen durch eine Düse;
d) Kalibrieren der schichtweise übereinandergelegten geschmolzenen Polymermassen unter Ausbildung eines plattenförmigen Trägers aufweisend zumindest eine Trägerschicht umfassend die erste Polymermasse und eine die Trägerschicht kontaktierende siegelfähige Schicht umfassend die zweite Polymermasse.

Gegenstand der vorliegenden Erfindung ist ferner eine Vorrichtung zur Herstellung eines dekorierten Wand- oder Bodenpaneels sowie ein Wand- oder Bodenpaneel, welches gemäß dem vorbeschriebenen Verfahren hergestellt ist, ein Plattenförmiger Träger für ein dekoriertes Wand- oder Bodenpaneel, hergestellt gemäß dem vorbeschriebenen Verfahren, sowie ein Dekorpaneel, hergestellt gemäß dem vorbeschriebenen Verfahren.

Dekorierte Platten sind an sich bekannt und diese werden beispielsweise im Innenausbau als Boden oder Wandbelag genutzt. Unter dem Begriff Wandpaneel sind dabei auch Paneele zu verstehen, welche zur Deckenbekleidung geeignet sind. Die Paneele bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Verfahren zur Herstellung von Paneelen weisen üblicherweise mehrere Verfahrensschritte auf. Beispielsweise kann über eine Streumaschine ein "Kuchen" aus Granulatpellets auf das Unterband einer Presse aufgebracht werden. Dieser Kuchen wird im Zuge der Herstellung üblicherweise in eine heiße Bandpresse mit Stahl- und/oder Teflonbändern geführt, in welcher das Aufheizen und Aufschmelzen der Granulatpellets erfolgt. Gleichzeitig zum Schmelzen kann das Material gepresst und in Form eines Trägers gebracht werden. Anschließend wird durch kontrolliertes Abkühlen eine Erstarrung bzw. Kristallisation des Trägermaterials herbeigeführt, wobei die Abwärme weitgehend ungenutzt bleibt, da die nutzbare Temperaturdifferenz durch das kontrollierte Abkühlen für eine anderweitige Nutzung zu gering ist. Die Wärmeübertragung erfolgt in diesem Bandpressverfahren von oben und unten durch Kontakt mit der Presse. Für das Abkühlen ist zudem nachteilig, dass die Wärme durch das glasfaserverstärkte Teflon-Band gelangen muss. Erst danach erfolgt die Wärmeübertragung durch Wärmeleitung in die Granulatschüttung, bzw. das Trägermaterial. Diese physikalischen Vorgänge sind sehr langsam, weil der Pelletkuchen zunächst noch Luft aus der Granulatschüttung enthält, welche produktphysikalisch nur langsam aus dem Träger herausgepresst werden darf. Um akzeptable Bandgeschwindigkeiten in der Produktion zu erreichen, muss ein hohes Temperaturgefälle zur Kühlung angelegt werden, welches zu erheblichen Abwärmeverlusten führt.

Verfahren zur Herstellung dekorierter Wand- oder Bodenpaneele umfassen allgemein häufig noch weitere aufwändige Verfahrensschritte, in denen Dekore, Deckschichten und/oder Verschleißschichten aufgebracht werden. Um diese aufzubringen müssen die Komponenten häufig aufwändig temperiert werden und es sind oft viele Verfahrensschritte notwendig, um die gewünschten Schichten miteinander zu verbinden.

Es ist daher die Aufgabe der vorliegenden Erfindung, ein verbessertes Verfahren zur Herstellung von dekorierten Wand- oder Bodenpaneelen bereitzustellen.

Gelöst wird diese Aufgabe durch ein Verfahren gemäß Anspruch 1, durch eine Vorrichtung gemäß Anspruch 13, einen plattenförmigen Träger nach Anspruch 14, und/oder ein Dekorpaneel nach Anspruch 15.

Mit der Erfindung wird somit ein Verfahren zur Herstellung eines dekorierten Wand- oder Bodenpaneels vorgeschlagen, aufweisend die Verfahrensschritte:
a) Bereitstellen einer ersten geschmolzenen Polymermasse und einer zweiten geschmolzenen Polymermasse;
b) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
c) Austreiben der schichtweise übereinandergelegten geschmolzenen Polymermassen durch eine Düse;
d) Kalibrieren der schichtweise übereinandergelegten geschmolzenen Polymermassen unter Ausbildung eines plattenförmigen Trägers aufweisend zumindest eine Trägerschicht umfassend die erste Polymermasse und eine die Trägerschicht kontaktierende siegelfähige Schicht umfassend die zweite Polymermasse.

Überraschenderweise wurde gefunden, dass das vorstehend beschriebenes Verfahren eine verbesserte Herstellung eines Wand- beziehungsweise Bodenpaneels ermöglicht. Durch die Aggregation der Verfahrensschritte lassen sich qualitativ hochwertige Paneele mit verbesserten Dekoreigenschaften innerhalb sehr kurzer Prozesszeiten erhalten. Die Paneele weisen insbesondere durch den erfindungsgemäßen Kalibrierschritt besonders ebenmäßige Trägeroberflächen auf, auf welchen sich besonders effizient qualitativ hochwertige Dekore aufbringen lassen. Ohne durch die Theorie gebunden zu sein, zeigen erfindungsgemäß aufgebrachte Dekore aufgrund der besonders glatten und fehlerfreien Oberfläche des Trägermaterials besonders hochwertige optische Eigenschaften. Die oben angegebene Verfahrensweise ermöglicht zudem einen hohen Durchsatz mit hohen Bahngeschwindigkeiten und verringert den Anteil nicht konformer Paneele.

Des Weiteren lässt sich über gerade über den erfindungsgemäßen Kalibrierteilschritt auch ein größerer Anteil der Prozessenergie zurückgewinnen, welches insgesamt zu einem kleineren CO₂-Fußabdruck des genutzten Verfahrens und somit auch des hergestellten Paneels beiträgt.

Durch das vorbeschriebene Verfahren kann zudem vorteilhafterweise erreicht werden, dass der plattenförmige Träger zugleich eine gute Formstabilität aufweist und besonders einfach weiter verarbeitbar ist. Insbesondere kann durch die ausgebildete siegelfähige Schicht erreicht werden, dass besonders einfach und präzise weitere Schichten auf den plattenförmigen Träger aufgebracht werden können. Indem die siegelfähige Schicht zusammen mit der Trägerschicht zu dem plattenförmigen Träger ausgebildet wird, kann erreicht werden, dass die siegelfähige Schicht besonders gut mit der Trägerschicht verbunden ist und zudem die siegelfähige Schicht auch die Vorteile des Kalibrierschrittes erfährt.

Das erfindungsgemäße Verfahren ist ein Verfahren zur Herstellung eines dekorierten Wand-oder Bodenpaneels. Unter dem Begriff "dekoriertes Wand- oder Bodenpaneel" beziehungsweise "Dekorpaneel" sind im Sinne der Erfindung insbesondere Wand-, Decken, oder Bodenpaneele zu verstehen, welche ein auf eine Trägerplatte aufgebrachtes, eine Dekorvorlage nachbildendes Dekor, aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus können Naturwerkstoffe wie Steine oder Keramiken nachempfunden werden.

Entsprechend kann unter einer "Dekorvorlage" im Sinne der vorliegenden Erfindung insbesondere verstanden werden, dass ein derartiger Naturwerkstoff beziehungsweise zumindest dessen Oberfläche durch das Dekor imitiert beziehungsweise nachempfunden werden soll.

Der Verfahrensschritt a) umfasst das Bereitstellen einer ersten geschmolzenen Polymermasse und einer zweiten geschmolzenen Polymermasse. Die geschmolzenen Polymermassen zeigen jeweils, zumindest teilweise, die Eigenschaften einer fließfähigen viskosen Flüssigkeit und können beispielsweise durch einen thermischen Behandlungsschritt von üblicherweise als Granulat vorliegenden Polymeren erhalten werden. Die geschmolzene Polymermasse kann dabei jeweils aus nur einer homogenen oder aus mehreren Polymermassen bestehen, welche miteinander vermischt oder in einer definierten Form übereinander geschichtet (Feedblock) vorliegen. Unter einem "Granulat" beziehungsweise einem "granulären Material" kann dabei ein Feststoff beziehungsweise ein Haufwerk eines Feststoffs verstanden werden, welcher eine Vielzahl fester Partikel, wie etwa Körner oder Kugeln, umfasst oder daraus besteht. Beispielhaft aber nicht abschließend seien hier körnige oder pulverförmige Materialien genannt oder als Mahlgüter vorliegende geeignete Recyclingmaterialien.

Bevorzugt kann vorgesehen sein, dass die erste Polymermasse ein erstes Feststoffmaterial aufweist, wobei das erste Feststoffmaterial bevorzugt ein Feststoffmaterial aufweist ausgewählt aus der Gruppe bestehend aus einem Schichtsilikatpulver, einem Kreidepulver und Mischungen davon, wobei das erste Feststoffmaterial besonders bevorzugt Talkum aufweist. Dadurch kann erreicht werden, dass die Trägerschicht besonders gute mechanische Eigenschaften aufweist und zugleich eine gute Kompatibilität mit der siegelfähigen Schicht aufweist.

Unter Schichtsilikatpulver wird dabei in an sich bekannter Weise ein Pulver aus einem Schichtsilikat verstanden. Als Schichtsilikat bezeichnet man bekannter Weise Minerale aus der Gruppe der Silikate, deren Silikatanionen üblicherweise in Schichten angeordnet sind. Beispielsweise werden unter Schichtsilikaten Minerale aus der Glimmergruppe, der Chloritgruppe, der Kaolinitgruppe und der Serpentingruppe verstanden.

Somit ist das erste Feststoffmaterial vorteilhafter Weise zumindest durch einen Großteil aus dem mineralischen Stoff Schichtsilikat gebildet, wobei dieser Stoff etwa als Pulverform eingesetzt werden kann beziehungsweise in der geschmolzenen Polymermasse in Form von Partikeln vorliegen kann. Grundsätzlich kann das erste Feststoffmaterial aus einem pulverförmigen Feststoff bestehen.

Schichtsilikate bieten den Vorteil, dass sie die Herstellung eines Trägers mit guten mechanischen Eigenschaften erlauben können und sich gleichzeitig durch ihre Schichtstruktur gut zu entsprechenden Pulvern verarbeiten lassen können.

In einer Ausgestaltung der Erfindung kann das Schichtsilikatpulver Talkum umfassen. Unter Talkum wird in an sich bekannter Weise ein Magnesiumsilikathydrat verstanden, welches beispielsweise die chemische Summenformel M₉₃[Si₄O₁₀(OH)₂] aufweisen kann. In einer weiteren bevorzugten Ausgestaltung kann das Schichtsilikatpulver zu wenigstens 80 Gew.-%, besonders bevorzugt zu wenigstens 95 Gew.-%, aus Talkum bestehen.

Insbesondere Talkum bietet den Vorteil, dass dies eine besonders schonende Herstellung des Trägers ermöglichen, da es problemlos in dem geschmolzenen Polymermaterial eingebettet werden kann und damit keinen abrasiven Effekt auf verwendete Gerätschaften ausübt.

Unter Kreidepulver wird dabei in an sich bekannter Weise ein Pulver aus einer Kreide verstanden. Unter Kreide wird im Sinne der vorliegenden Erfindung ein Kalkstein verstanden. Insbesondere kann Kreide im Wesentlichen aus Calcit bestehen.

Kreide bietet insbesondere den Vorteil, dass sie dem Träger zusätzlich zu den vorteilhaften mechanischen Eigenschaften auch eine helle bis weiße Grundfarbe verleihen kann, wodurch die farbliche Gestaltung des plattenförmigen Trägers als besonders einfach sein kann.

Bevorzugt kann vorgesehen sein, dass die erste Polymermasse das erste Feststoffmaterial aufweist in einem Bereich von größer oder gleich 50 Gew.-% bis kleiner oder gleich 70 Gew.-%, bezogen auf das Gesamtgewicht der ersten Polymermasse, bevorzugt größer oder gleich 55 Gew.-% bis kleiner oder gleich 65 Gew.-%, beispielsweise 60 Gew.-%. Es konnte überraschenderweise gezeigt werden, dass sich dadurch besonders gute mechanische Eigenschaften erreichen lassen.

Bevorzugt kann vorgesehen sein, dass die erste Polymermasse ein erstes Vinylpolymer aufweist, wobei das erste Vinylpolymer vorzugsweise ein rezykliertes Vinylpolymer, besonders bevorzugt ein Polypropylen, ganz besonders bevorzugt ein rezykliertes Polypropylen ist. Dadurch kann erreicht werden, dass die Trägerschicht gute elastische Eigenschaften aufweist und einfach rezykliert werden kann.

Bevorzugt kann vorgesehen sein, dass die erste Polymermasse das erste Vinylpolymer aufweist in einem Bereich von größer oder gleich 50 Gew.-% bis kleiner oder gleich 10 Gew.-%, bezogen auf das Gesamtgewicht der ersten Polymermasse, bevorzugt größer oder gleich 20 Gew.-% bis kleiner oder gleich 40 Gew.-%, besonders bevorzugt größer oder gleich 20 Gew.-% bis kleiner oder gleich 30 Gew.-%.

Verfahren, wobei die erste Polymermasse ein Gewichtsverhältnis vom ersten Feststoffmaterial zum ersten Vinylpolymer aufweist in einem Bereich von Größer oder gleich 2:1 bis kleiner oder gleich 4:1, bevorzugt kleiner oder gleich 3:1.

Die vorbeschriebene erste Polymermasse bietet insbesondere den Vorteil, ein Paneel mit einer guten Feuchteresistenz zu ermöglichen. Insbesondere kann unter Verwendung einer derartigen Polymermasse zur Ausbildung der Trägerschicht, signifikant reduziert oder sogar vollständig verhindert werden, dass ein daraus hergestelltes Paneel bei Feuchteeinwirkung aufquillt. Ferner kann auch eine hitzebedingte Ausdehnung verhindert oder zumindest signifikant reduziert werden. Dadurch wird es möglich, dass ein Verlegen beziehungsweise Anbringen von mit der ersten Polymermasse hergestellten Paneelen deutlich vereinfacht wird und/oder dass Probleme nach dem Verlegen beziehungsweise Anbringen der Paneele deutlich reduziert werden.

Gleichzeitig bietet die erste Polymermasse den Vorteil, dass hiermit erzeugte Paneele eine sehr gute Stabilität aufweisen, so dass die Gefahr von Beschädigungen des Paneels während des Transports und während des Gebrauchs äußerst gering ist. Dies kann insbesondere durch das erste Feststoffmaterial erreicht werden.

Dadurch, dass die erste geschmolzene Polymermasse das erste Vinylpolymer, wie etwa rezykliertes Polypropylen, aufweist, kann es trotz der hohen Stabilität ermöglicht werden, dass aus der Polymermasse erzeugte Paneele sehr elastisch beziehungsweise federnd und/oder biegeweich sein können, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Insbesondere die Vinylpolymere bieten ferner den Vorteil, dass die aus ihnen hergestellten Produkte sehr leicht rezykliert werden können. Hierdurch ergibt sich eine weitere Möglichkeit zur Senkung der Herstellungskosten.

Bevorzugt kann vorgesehen sein, dass die erste Polymermasse zumindest einen polymeren Zusatz aufweist, ausgewählt aus der Gruppe bestehend aus einem thermoplastischen Elastomer auf Olefinbasis, einem ersten Vinyl-Homopolymer, einem ersten Vinyl-Copolymer, einem ersten Haftvermittler, und einem zweiten Vinyl-Copolymer, wobei die erste Polymermasse vorzugsweise zumindest zwei polymere Zusätze aufweist, mehr bevorzugt zumindest drei, mehr bevorzugt zumindest vier, besonders bevorzugt zumindest fünf. Dadurch können die Eigenschaften der Trägerschicht noch weiter verbessert werden.

Bevorzugt kann vorgesehen sein, dass die erste Polymermasse den polymeren Zusatz aufweist in einer Gesamtmenge in einem Bereich von größer oder gleich 0 Gew.-% bis kleiner oder gleich 25 Gew.-%, bezogen auf das Gesamtgewicht der ersten Polymermasse, bevorzugt größer oder gleich 10 Gew.-% bis kleiner oder gleich 20 Gew.-%, besonders bevorzugt größer oder gleich 15 Gew.-% bis kleiner oder gleich 17 Gew.-%.

Bevorzugt kann vorgesehen sein, dass die erste Polymermasse als polymeren Zusatz das thermoplastisches Elastomer auf Olefinbasis aufweist in einem Bereich von größer oder gleich 1 Gew.-% bis kleiner oder gleich 10 Gew.-%, bezogen auf das Gesamtgewicht der ersten Polymermasse., bevorzugt größer oder gleich 3 Gew.-% bis kleiner oder gleich 8 Gew.-%, besonders bevorzugt größer oder gleich 5 Gew.-% bis kleiner oder gleich 7 Gew.-%.

Bevorzugt kann vorgesehen sein, dass die erste Polymermasse als polymeren Zusatz das erste Vinyl-Homopolymer aufweist, wobei das erste Vinyl-Homopolymer insbesondere ein Polypropylen-Homopolymer aufweist, wobei die erste Polymermasse das erste Vinyl-Homopolymer aufweist in einem Bereich von größer oder gleich 1 Gew.-% bis kleiner oder gleich 10 Gew.-%, bezogen auf das Gesamtgewicht der ersten Polymermasse, bevorzugt größer oder gleich 3 Gew.-% bis kleiner oder gleich 7 Gew.-%, besonders bevorzugt größer oder gleich 4 Gew.-% bis kleiner oder gleich 6 Gew.-%.

Bevorzugt kann vorgesehen sein, dass die erste Polymermasse als polymeren Zusatz das erstes Vinyl-Copolymer aufweist, wobei das erste Vinyl-Copolymer bevorzugt ein propylenbasiertes Vinyl-Copolymer umfasst, besonders bevorzugt ein Propylen-Ethylen-Random-Copolymer, wobei die erste Polymermasse das erste Vinyl-Copolymer aufweist in einem Bereich von größer oder gleich 1 Gew.-% bis kleiner oder gleich 5 Gew.-%, bezogen auf das Gesamtgewicht der ersten Polymermasse, besonders bevorzugt größer oder gleich 2 Gew.-% bis kleiner oder gleich 4 Gew.-%.

Bevorzugt kann vorgesehen sein, dass die erste Polymermasse als polymeren Zusatz den ersten Haftvermittler aufweist, wobei der erste Haftvermittler bevorzugt einen propylenbasierten Haftvermittler aufweist, besonders bevorzugt ein mit Maleinsäureanhydrid gepfropftes Polypropylen, wobei die erste Polymermasse den ersten Haftvermittler aufweist in einem Bereich von größer oder gleich 1 Gew.-% bis kleiner oder gleich 5 Gew.-%, bezogen auf das Gesamtgewicht der ersten Polymermasse, besonders bevorzugt größer oder gleich 2 Gew.-% bis kleiner oder gleich 4 Gew.-%.

Bevorzugt kann vorgesehen sein, dass die erste Polymermasse als polymeren Zusatz das zweites Vinyl-Copolymer aufweist, wobei das zweite Vinyl-Copolymer bevorzugt ein polyethylenbasiertes Vinyl-Copolymer umfasst, besonders bevorzugt ein lineares Polyethylen niedriger Dichte (LLDPE), wobei die erste Polymermasse das zweite Vinyl-Copolymer aufweist in einem Bereich von größer oder gleich 0,5 Gew.-% bis kleiner oder gleich 3 Gew.-%, bezogen auf das Gesamtgewicht der ersten Polymermasse, besonders bevorzugt größer oder gleich 1 Gew.-% bis kleiner oder gleich 2 Gew.-%.

Bevorzugt kann vorgesehen sein, dass die erste Polymermasse bezogen auf das Gesamtgewicht der ersten Polymermasse aufweist, das erste Feststoffmaterial in einem Bereich von größer oder gleich 50 Gew.-% bis kleiner oder gleich 70 Gew.-%, das erste Vinylpolymer in einem Bereich von größer oder gleich 50 Gew.-% bis kleiner oder gleich 10 Gew.-%, das thermoplastische Elastomer auf Olefinbasis in einem Bereich von größer oder gleich 1 Gew.-% bis kleiner oder gleich 10 Gew.-%, das erste Vinyl-Homopolymer in einem Bereich von größer oder gleich 1 Gew.-% bis kleiner oder gleich 10 Gew.-%, das erste Vinyl-Copolymer in einem Bereich von größer oder gleich 1 Gew.-% bis kleiner oder gleich 5 Gew.-%, den ersten Haftvermittler in einem Bereich von größer oder gleich 1 Gew.-% bis kleiner oder gleich 5 Gew.-%, und das zweite Vinyl-Copolymer in einem Bereich von größer oder gleich 0,5 Gew.-% bis kleiner oder gleich 3 Gew.-%.

Es konnte gezeigt werden, dass sich diese Zusammensetzung besonders für das vorbeschriebene Verfahren eignet, da die somit erhaltenen plattenförmigen Träger besonders gute mechanische Eigenschaften aufweisen und zugleich das Verfahren mit besonders hohen Liniengeschwindigkeiten durchgeführt werden kann.

Bevorzugt kann vorgesehen sein, dass die zweite Polymermasse ein drittes Vinyl-Copolymer aufweist, wobei das dritte Vinyl-Copolymer bevorzugt ein Vinyl-Copolymer ausgewählt aus der Gruppe bestehend aus einem propylenbasiertem Vinyl-Copolymer, einem Vinyl-Terpolymer und Mischungen davon ist, besonders bevorzugt ausgewählt aus der Gruppe bestehend aus einem Propylen-Ethylen-Random-Copolymer, einem Polypropylen-Ethylen-Butylen-Copolymer, einem Ethylen-Propylen-Dien-Monomer Kautschuk und Mischungen davon..

Dadurch kann erreicht werden, dass der plattenförmige Träger besonders einfach mit weiteren Schichten versehen werden kann. Insbesondere kann dadurch erreicht werden, dass die Oberfläche des plattenförmigen Trägers besonders gute Siegeleigenschaften aufweist. Beispielsweise kann dadurch erreicht werden, dass die Oberfläche des plattenförmigen Trägers einen Schmelzpunkt aufweist, der oberhalb einer notwendigen Siegeltemperatur liegt. Zudem kann dadurch erreicht werden, dass die siegelfähige Schicht sich gut mit der Trägerschicht verbindet und der plattenförmige Träger insgesamt gute mechanische Eigenschaften aufweist.

Bevorzugt kann vorgesehen sein, dass das dritte Vinyl-Copolymer eine Mischung aufweisend Propylen-Ethylen-Random-Copolymer und Polypropylen-Ethylen-Butylen-Copolymer umfasst.

Bevorzugt kann vorgesehen sein, dass das dritte Vinyl-Copolymer einen Schmelzpunkt gemessen nach ISO 11357-3 aufweist in einem Bereich von größer oder gleich 110 °C bis kleiner oder gleich 160 °C, bevorzugt größer oder gleich von 120 °C bis kleiner oder gleich 150 °C, besonders bevorzugt größer oder gleich 130° C bis kleiner oder gleich 140 °C.

Bevorzugt kann vorgesehen sein, dass das dritte Vinyl-Copolymer eine Vicat Erweichungstemperatur (A50) gemessen nach ISO 306 aufweist in einem Bereich von größer oder gleich 100 °C bis kleiner oder gleich 120°C, bevorzugt größer oder gleich 105 °C bis kleiner oder gleich 115 °C.

Bevorzugt kann vorgesehen sein, dass das dritte Vinyl-Copolymer eine Schmelzflussrate gemessen nach ISO 1133-1 (230 °C/2,16 kg) aufweist in einem Bereich von größer oder gleich 5 g/10 min bis kleiner oder gleich 7 g/10 min, besonders bevorzugt 5,5 g/10 min bis kleiner oder gleich 6 g/10 min.

Bevorzugt kann vorgesehen sein, dass das dritte Vinyl-Copolymer eine Siegelinitiationstemperatur aufweist in einem Bereich von größer oder gleich 75 °C bis kleiner oder gleich 125 °C, bevorzugt größer oder gleich 80 °C bis kleiner oder gleich 115 °C, besonders bevorzugt größer oder gleich 85 °C bis kleiner oder gleich 100 °C.

Unter Siegelinitiationstemperatur wird im Sinne der vorliegenden Anmeldung die minimale Temperatur verstanden, bei der das dritte Vinyl-Copolymer mit einem Träger versiegelt werden kann.

Bevorzugt kann vorgesehen sein, dass das die Siegelinitiationstemperatur des dritten Vinyl-Copolymers zumindest 10 °C kleiner ist als die Schmelztemperatur des dritten Vinyl-Copolymers, bevorzugt zumindest 20 °C kleiner, besonders bevorzugt zumindest 25 °C kleiner.

Durch die vorbeschriebenen Parameter kann erreicht werden, dass die siegelfähige Schicht gut mit einer Folie versiegelt werden kann, ohne dass die siegelfähige Schicht schmilz und/oder der plattenförmige Träger sich verformt.

Bevorzugt kann vorgesehen sein, dass das zweite Polymer ein thermoplastisches Vinylpolymer ist.

Bevorzugt kann vorgesehen sein, dass das Propylen-Ethylen-Random-Copolymer einen Ethylengehalt aufweist in einem Bereich von größer oder gleich 1 Gew.-% bis kleiner oder gleich 10 Gew.-%, bezogen auf das Propylen-Ethylen-Random-Copolymer, bevorzugt größer oder gleich 2 Gew.-% bis kleiner oder gleich 6 Gew.-%, beispielsweise 4 Gew.-%.

Bevorzugt kann vorgesehen sein, dass das Propylen-Ethylen-Random-Copolymer eine Vicat Erweichungstemperatur (A50) gemessen nach ISO 306 aufweist in einem Bereich von größer oder gleich 90 °C bis kleiner oder gleich 120°C, bevorzugt größer oder gleich 100 °C bis kleiner oder gleich 110 °C.

Bevorzugt kann vorgesehen sein, dass das Polypropylen-Ethylen-Butylen-Copolymer einen Schmelzpunkt gemessen nach ISO 11357-3 aufweist in einem Bereich von größer oder gleich 110 °C bis kleiner oder gleich 150 °C, bevorzugt größer oder gleich 120 °C bis kleiner oder gleich 130 °C.

Bevorzugt kann vorgesehen sein, dass das Polypropylen-Ethylen-Butylen-Copolymer eine Vicat Erweichungstemperatur (A50) gemessen nach ISO 306 aufweist in einem Bereich von größer oder gleich 80 °C bis kleiner oder gleich 110°C, bevorzugt größer oder gleich 90 °C bis kleiner oder gleich 100 °C.

Bevorzugt kann vorgesehen sein, dass die Schmelzflussraten MFR (230 °C, 2,16 kg) des ersten Polymers und des zweite Polymers gemessen nach EN ISO 1133-1, einen Differenzbetrag zueinander aufweisen von kleiner oder gleich 3 g/10 min, bevorzugt kleiner oder gleich 2 g/10 min, besonders bevorzugt kleiner oder gleich 1 g/10 min.

Bevorzugt kann vorgesehen sein, dass die zweite Polymermasse das dritte Vinyl-Copolymer aufweist in einem Bereich von größer oder gleich 50 Gew.-% bis kleiner oder gleich 100 Gew.-%, bezogen auf das Gewicht der zweiten Polymermasse, bevorzugt größer oder gleich 55 bis kleiner oder gleich 80 Gew.-%, mehr bevorzugt größer oder gleich 55 Gew.-% bis kleiner oder gleich .70 Gew.-%, besonders bevorzugt größer oder gleich 60 Gew.-% bis kleiner oder gleich 65 Gew.-%.

Bevorzugt kann vorgesehen sein, dass die zweite Polymermasse ein Vinyl-Alkylacrylat-Copolymer aufweist, bevorzugt ein Vinyl-Butylacrylat-Copolymer, besonders bevorzugt ein Ethylen-Butylacrylat.

Bevorzugt kann vorgesehen sein, dass die zweite Polymermasse das Vinyl-Alkylacrylat-Copolymer aufweist in einem Bereich von größer oder gleich 0 Gew.-% bis kleiner oder gleich 50.-Gew.-%, bezogen auf das Gewicht der zweiten Polymermasse, bevorzugt größer oder gleich 10 Gew.-% bis kleiner oder gleich 40 Gew.-%, besonders bevorzugt größer oder gleich 15 Gew.-% bis kleiner oder gleich 30 Gew.-%.

Bevorzugt kann vorgesehen sein, dass die zweite Polymermasse einen Masterbatch umfasst, bevorzugt einen vinylpolymerbasierten Masterbatch, besonders bevorzugt einen LDPEbasierten Masterbatch, wobei der Masterbatch vorzugsweise weißes Pigment umfasst, bevorzugt Titandioxid.

Dadurch kann vorteilhafterweise erreicht werden, dass die siegelfähige Schicht zugleich als Dekoruntergrund genutzt werden kann. Somit kann erreicht werden, dass ein auf den plattenförmigen Träger aufgebrachtes Dekor besonders gut zur Geltung kommt.

Bevorzugt kann vorgesehen sein, dass die zweite Polymermasse den Masterbatch aufweist in einem Bereich von größer oder gleich 0 Gew.-% bis kleiner oder gleich 10 Gew.-%, bezogen auf das Gewicht der zweiten Polymermasse, bevorzugt größer 2,5 Gew.-% bis kleiner 7,5 Gew.-%, beispielsweise 5 Gew.-%.

Bevorzugt kann vorgesehen sein, dass die zweite Polymermasse ein zweites Feststoffmaterial aufweist, wobei das zweite Feststoffmaterial bevorzugt ausgewählt ist aus der Gruppe bestehend aus Calciumcarbonat und Kaolin.

Bevorzugt kann vorgesehen sein, dass die zweite Polymermasse das zweite Feststoffmaterial aufweist in einem Bereich von größer oder gleich 0 Gew.-% bis kleiner oder gleich 50 Gew.-%, bezogen auf das Gewicht der zweiten Polymermasse, bevorzugt größer oder gleich 5 Gew.-% bis kleiner oder gleich 45 Gew.-%, mehr bevorzugt größer oder gleich 15 Gew.-% bis kleiner oder gleich 40 Gew.-%.besonders bevorzugt größer oder gleich 25 Gew.-% bis kleiner oder gleich 35 Gew.-%.

Bevorzugt kann vorgesehen sein, dass die zweite Polymermasse bezogen auf das Gesamtgewicht der zweiten Polymermasse aufweist, das dritte Vinyl-Copolymer in einem Bereich von größer oder gleich 50 Gew.-% bis kleiner oder gleich 100 Gew.-%, das Vinyl-Alkylacrylat-Copolymer in einem Bereich von größer oder gleich 0 Gew.-% bis kleiner oder gleich 50.-Gew.-%, den Masterbatch aufweist in einem Bereich von größer oder gleich 0 Gew.-% bis kleiner oder gleich 10 Gew.-%, und das zweite Feststoffmaterial in einem Bereich von größer oder gleich 0 Gew.-% bis kleiner oder gleich 50 Gew.-%.

Es konnte gezeigt werden, dass sich diese Zusammensetzung besonders für das vorbeschriebene Verfahren eignet, da sich die somit erhaltenen plattenförmigen Träger besonders gut mit Dekoren versehen lassen können.

Bevorzugt kann vorgesehen sein, dass in Schritt a) zusätzlich eine dritte geschmolzene Polymermasse bereitgestellt wird und der in Schritt d) ausgebildete plattenförmige Träger zusätzlich zumindest eine die Trägerschicht kontaktierende Gegenzugschicht aufweist umfassend die dritte Polymermasse.

Dadurch kann vorteilhafterweise erreicht werden, dass der erhaltene plattenförmige Träger sich besonders wenig verzieht. Indem die Gegenzugschicht gemeinsam mit den anderen Schichten des plattenförmigen Trägers hergestellt wird kann zudem erreicht werden, dass auf einen weiteren Verfahrensschritt zur Aufbringung der Gegenzugschicht verzichtet werden kann. Ferner kann dadurch erreicht werden, dass die Gegenzugschicht besonders gut mit der Trägerschicht verbunden ist, so dass der plattenförmige Träger besonders formstabil ist. Zudem kann die Gegenzugschicht eine besonders gute Verklebbarkeit des plattenförmigen Trägers ermöglichen.

Bevorzugt kann vorgesehen sein, dass die dritte Polymermasse ein drittes Feststoffmaterial aufweist, wobei das dritte Feststoffmaterial bevorzugt ein Schichtsilikatpulver aufweist, wobei das dritte Feststoffmaterial besonders bevorzugt Talkum aufweist. Das dritte Feststoffmaterial der dritten Polymermasse kann bevorzugt genau so definiert sein wie das erste Feststoffmaterial der ersten Polymermasse. In einer bevorzugten Ausgestaltung kann vorgesehen sein, dass das dritte Feststoffmaterial das gleiche ist wie das erste Feststoffmaterial.

Bevorzugt kann vorgesehen sein, dass die dritte Polymermasse das dritte Feststoffmaterial aufweist in einem Bereich von größer oder gleich 10 Gew.-% bis kleiner oder gleich 70 Gew.-%, bezogen auf das Gesamtgewicht der dritten Polymermasse, bevorzugt größer oder gleich 20 Gew.-% bis kleiner oder gleich 60 Gew.-%, besonders bevorzugt größer oder gleich 30 Gew.-% bis kleiner oder gleich 50 Gew.-%.

Bevorzugt kann vorgesehen sein, dass die dritte Polymermasse ein zweites Vinylpolymer aufweist, wobei das zweite Vinylpolymer vorzugsweise ein rezykliertes Vinylpolymer aufweist, besonders bevorzugt ein Polypropylen, ganz besonders bevorzugt ein rezykliertes Polypropylen.

Dadurch kann vorteilhafterweise erreicht werden, dass die Gegenzugschicht besonders gut einen Gegenzug aufbaut. Ohne an eine Theorie gebunden zu sein, wird davon ausgegangen, dass dies durch die höhere Schrumpfneigung der verwendeten dritten Polymermasse im vergleich zur ersten Polymermasse erreicht werden kann.

Bevorzugt kann vorgesehen sein, dass die dritte Polymermasse das zweite Vinylpolymer aufweist in einem Bereich von größer oder gleich 30 Gew.-% bis kleiner oder gleich 90 Gew.-%, bezogen auf das Gesamtgewicht der ersten Polymermasse, bevorzugt größer oder gleich 40 Gew.-% bis kleiner oder gleich 80 Gew.-%, besonders bevorzugt größer oder gleich 50 Gew.-% bis kleiner oder gleich 70 Gew.-%.

Bevorzugt kann vorgesehen sein, dass die dritte Polymermasse zumindest einen zweiten Haftvermittler aufweist, wobei der zweite Haftvermittler vorzugsweise ausgewählt ist aus einem propylenbasierten Haftvermittler, einem ethylenbasierten Copolymer und Mischungen davon, besonders bevorzugt aus einem mit Maleinsäureanhydrid gepfropften Polypropylen, einem Ethyl-Butylacrylat und Mischungen davon.

Dadurch kann vorteilhafterweise erreicht werden, dass die Gegenzugschicht besonders gut mit der Trägerschicht verbunden wird, so dass der plattenförmige Träger besonders gute mechanische Eigenschaften aufweist. Ferner kann dadurch erreicht werden, dass der plattenförmige Träger besonders gut verklebt werden kann. Insbesondere lässt sich für derartige plattenförmige Träger eine besonders gute Haftung für übliche Klebstoffe, wie beispielsweise silanmodifizierte Polymerklebstoffe (SMP) oder polyurethanbasierte Klebstoffe (PU), erreichen.

Bevorzugt kann vorgesehen sein, dass die dritte Polymermasse den zweiten Haftvermittler aufweist in einem Bereich von größer oder gleich 0 Gew.-% bis kleiner oder gleich 5 Gew.-%, bezogen auf das Gesamtgewicht der ersten Polymermasse, bevorzugt größer oder gleich 1 Gew.-% bis kleiner oder gleich 3 Gew.-%, beispielsweise 2 Gew.-%.

Bevorzugt kann vorgesehen sein, dass die dritte Polymermasse bezogen auf das Gesamtgewicht der dritten Polymermasse aufweist, das dritte Feststoffmaterial in einem Bereich von größer oder gleich 10 Gew.-% bis kleiner oder gleich 70 Gew.-%, das zweite Vinylpolymer in einem Bereich von größer oder gleich 30 Gew.-% bis kleiner oder gleich 90 Gew.-%, und den zweiten Haftvermittler in einem Bereich von größer oder gleich 0 Gew.-% bis kleiner oder gleich 5 Gew.-%.

Zur Herstellung der geschmolzenen Polymermasse können beispielhaft ein oder mehrere sogenannte Dryblends aufgeschmolzen werden, also trockene Kunststoffpulver mit Zuschlagstoffen. Diese Materialien können im Verfahrensschritt a) beispielsweise durch einen Schneckenextruder bereitgestellt werden, in welchem mittels Druck-, Temperatur- und Scherkräften das polymere Material oder die Dryblends aufgeschmolzen, gegebenenfalls homogenisiert und an den Verfahrensschritt b) weitergeleitet werden.

Im Verfahrensschritt b) erfolgt das Extrudieren der geschmolzenen Polymermassen wobei insbesondere jede Polymermasse mit einem separaten Extruder extrudiert wird. Beispielsweise können die geschmolzenen Polymermassen in einen Feedblock oder eine Mehrkanaldüse extrudiert werden. Die geschmolzenen Polymermassen werden dabei schichtweise übereinandergelegt. In Verfahrensschritt c) werden die schichtweise übereinandergelegten Geschmolzenen Polymermassen durch eine Düse ausgetrieben. Die geschmolzenen und plastifizierten Polymermassen werden dabei mittels Druck durch eine Düse gepresst, wobei zweckmäßigerweise durch die Wahl der Düsengeometrie schon ein Teil der endgültigen Produktgeometrie vorgegeben wird. Für Paneele hat sich insbesondere die Wahl einer Schlitz- oder einer Breitschlitzdüse als geeignet herausgestellt, welche ein Verhältnis von Schlitzbreite zu -Höhe von mehr als ca. 4:1 (Breite:Höhe), bevorzugt mehr als 10:1, des Weiteren bevorzugt von mehr als 20:1 aufweist. Insbesondere für die erfindungsgemäßen Paneele lassen sich durch diese eher breite und schmale Düsengeometrie schon ein Großteil der Trägerstruktur vorformen, welches den nachfolgenden Aufwand für die Kalibrierung der extrudierten polymeren Masse klein halten kann. Insbesondere kann es vorteilhaft sein, dass die Breitschlitzdüse Mittel zur Einstellung des Düsenspaltes aufweist. Diese Mittel können beispielsweise dazu genutzt werden, die Randbereiche des extrudierten flachen Stranges extrem abzuflachen, sodass in diesen Randbereichen ohne großen Kalibrierungsaufwand in einem weiteren Verfahrensschritt im Vergleich zu mittleren Paneeldicken flachere Verbindungsstellen zwischen unterschiedlichen Paneelen ausgebildet werden können.

Bevorzugt kann vorgesehen sein, dass die geschmolzenen Polymermassen derart extrudiert werden, dass die Trägerschicht eine Schichtdicke aufweist von größer oder gleich 60 % bis kleiner oder gleich 95 % der Dicke des plattenförmigen Trägers, insbesondere kleiner oder gleich 90 %. Dadurch kann erreicht werden, dass der plattenförmige Träger besonders stabil ist.

Bevorzugt kann vorgesehen sein, dass die geschmolzenen Polymermassen derart extrudiert werden, dass die siegelfähige Schicht eine Schichtdicke aufweist von größer oder gleich 5 % bis kleiner oder gleich 15 % der Dicke des plattenförmigen Trägers. Dadurch kann erreicht werden, dass der plattenförmige Träger sich besonders gut zum Aufbringen eines Dekors eignet.

Bevorzugt kann vorgesehen sein, dass die geschmolzenen Polymermassen derart extrudiert werden, dass die Gegenzugschicht eine Schichtdicke aufweist von größer oder gleich 5 bis kleiner oder gleich 15 % der Dicke des plattenförmigen Trägers. Dadurch kann erreicht werden, dass der plattenförmige Träger sich besonders wenig verformt.

Im Verfahrensschritt d) erfolgt das Kalibrieren der schichtweise übereinandergelegten geschmolzenen Polymermassen unter Ausbildung eines plattenförmigen Trägers aufweisend zumindest eine Trägerschicht umfassend die erste Polymermasse und eine die Trägerschicht kontaktierende siegelfähige Schicht umfassend die zweite Polymermasse.

Bevorzugt kann vorgesehen sein, dass das Kalibrieren mittels einer Anordnung aus mehreren rotierbaren Walzen erfolgt, wobei die einzelnen Walzen über- oder hintereinander angeordnet sind und jede einzelne Walze mit benachbarten Walzen mindestens einen Kalibrierspalt ausbildet durch welchen die schichtweise übereinandergelegten geschmolzenen Polymermassen geführt werden, wobei die Kalibrierspalt-Höhen über eine horizontale und/oder vertikale Bewegung einzelner Walzen während des Herstellungsprozesses variabel einstellbar sind.

Insbesondere lässt sich über die erfindungsgemäße Integration des Walzen-Kalibrierschritts in die Herstellung der Anteil an Lufteinschlüssen an der Paneel-Oberfläche reduzieren, welches wahrscheinlich auf eine verbesserte Entfernung im Träger vorhandener sowie einem verbesserten Ausschluss von Luft in den Walzenspalten zurückgeführt werden kann. Neben den direkten Prozessvorteilen lassen sich durch das flexible Verfahren unter Einsatz individuell steuerbarer Walzen auch die Rüst- und Einfahrzeiten der Anlage verkürzen, welches in einer höheren Verfahrenseffizienz mündet.

Die Formung und die Kalibrierung der Paneele erfolgt somit nicht durch die Verwendung einer flächigen Presse, sondern durch den Einsatz von Walzen. Durch die durch die Walzenanordnung gebildeten Spalträume zwischen den Walzen werden die schichtweise übereinandergelegten geschmolzenen Polymermassen geführt und aufgrund der mechanischen Belastung in den Walzenspalten wird die Masse gequetscht und auf die gewünschte Dicke gebracht. Neben den auftretenden mechanischen Kräften durch die Walzen können die polymeren Massen gleichzeitig auch gekühlt werden. Dies kann über die Walzen oder mittels anderer Kühlmittel, z.B. durch Anblasen mit Luft, erfolgen. Das sich mittels der Walzenanordnung und mittels der Walzenspalte eine effiziente Kalibrierung erhalten lässt ist überraschend, da die viskoelastischen Eigenschaften der geschmolzenen polymeren Massen eher den Einsatz von Pressen mit großer Oberfläche nahelegen. Die im Vergleich zu den Pressen eher kleine aktive Kalibrieroberfläche in den Walzenspalten sollte eher dazu führen, dass aufgrund der rheologischen Eigenschaften der Polymermasse, wie beispielsweise thixotropen Eigenschaften, sich an kleinen Kalibrieroberflächen nur eine ungenügende Kalibrierung ergibt. Dies ist überraschenderweise aber nicht der Fall, sodass über die Anordnung mehrerer Walzen eine effiziente und zeitsparende Produktion gewährleistet werden kann. Mehrere Walzen in diesem Zusammenhang bedeuten mehr als vier, also beispielsweise fünf Walzen, wobei die mehreren Walzen mindestens 3 oder 4 separate Spalte ausbilden. Bevorzugt sind die Spalte hintereinander, durch die Walzen getrennt, angeordnet. Insbesondere ist es erfindungsgemäß auch vorgesehen, dass die Kalibrierung des Trägers nur über das Führen des geschmolzenen Trägermaterials durch die Walzenspalte erfolgt. Insofern kann es erfindungsgemäß auch vorgesehen sein, dass das Verfahren auf den Einsatz plattenförmiger Presseinrichtungen, wie beispielsweise Bandpressen, gänzlich verzichten kann. Auch kann vorgesehen sein, dass die Kalibrierung der Träger nur durch die hintereinander angeordneten Walzen direkt aufeinanderfolgend an einem Ort der Vorrichtung erfolgt. Eine Aufteilung der Walzenanordnung, beispielsweise erst zwei Walzenspalte, gefolgt von beispielsweise einer Kühlstrecke und dann wieder ein oder zwei Walzenspalte, wäre in diesem Fall nicht erfindungsgemäß. Erfindungsgemäß kann weiter vorgesehen sein, dass die Kalibrierung direkt nach der Extrusion des Trägermaterials erfolgt und weitere signifikante Kalibrations- oder Glättungsschritte entfallen.

Die Kalibrierspalt-Höhen sind über eine horizontale oder vertikale Bewegung einzelner Walzen während des Herstellungsprozesses variabel einstellbar. Dies bedeutet, dass sich über eine Änderung der Position einer einzelnen Walze, sich auch die Spaltdimensionen desjenigen oder derjenigen Spalte ändern, welche zu benachbarten Walzen ausgebildet werden. So lassen sich die Spaltdimensionen und damit die Trägerhöhe über den Abstand der Walzen zueinander beeinflussen. Auch kann über die relative Höhe der einzelnen Walzen zueinander der Abzugs- oder Auftreffwinkel des geschmolzenen Polymermaterials auf die Walze geändert werden, welches unterschiedliche mechanische Kräfte, ggf. unterschiedliche Kühleigenschaften und - Flächen, sowie mögliche Lufteinschlüsse zwischen der Walze und dem Polymer nach sich zieht. Eine Walze ist während des Herstellungsprozesses variabel einstellbar, wenn die Walze während des Durchlaufens des polymeren Materials ihre X- und/oder Y-Position verändern kann. Die einzelnen Spalte können im Rahmen der Herstellung entweder isobar oder isochor gesteuert werden. Erstere Fahrweise gibt eine mechanische Kraft auf das polymere Trägermaterial im Walzenspalt vor, wohingegen letztere Fahrweise auf eine konstante Dicke des Spaltes zwischen zwei Walzen abstellt. In ersterer Fahrweise werden also die Walzenpositionen dynamisch angepasst, wohingegen bei letzterer die Walzenpositionen eher konstant zueinander gehalten werden.

Besonders vorteilhaft ist, wenn zwischen mehreren oder sämtlichen Walzen unterschiedliche Kalibrierspalte eingestellt werden können. Damit kann den während der Produktion auftretenden Schwankungen in der Trägerstärke und eventuell einer nicht ganz homogenen Kühlleistung der einzelnen Walzen entgegengewirkt werden. Jede der Walzen kann einfach nur "mitlaufen" oder die Förderung der Folie unterstützen, weshalb auch vorgesehen sein kann, dass die Walzen einzeln oder zusammen antreibbar sind. Je nach Walzenpositionierung kann das Trägermaterial die Walzen quasi in einer Wellenlinie durchlaufen und kommt somit einmal mit der einen und einmal mit der anderen Seite aufeinanderfolgender Walzen in Kontakt. Damit der Einfluss der Berührungsflächen zwischen Walze und Trägeroberfläche für beide Trägerseiten weitgehend gleich ist, kann vorgesehen sein, dass der Durchmesser der Hauptwalzen und der nachgeschalteten Walzen so gewählt ist, dass die Berührungsflächen zwischen Träger und Walzen auf beiden Seiten des Trägers weitgehend gleich sind. Beim Umschlingen einer jeweiligen Walze kann immer nur eine Extrudatseite gekühlt werden, wodurch ggf. Spannungen in der Platte auftreten können. Um diesen ungleichmäßigen Kühlprofil entgegenzuwirken, kann beispielsweise rückseitig aktiv über den Eintrag kalter Luft (z.B. Airknife) eine gleichmäßigere Kühlwirkung auf den Träger eingestellt werden.

Da das Abkühlverhalten über die Breite des Extrudats unterschiedlich sein kann und um auch einem Neck-In Effekt entgegenzuwirken ist es weiter möglich auf der Gegenseite mit Wärme im Randbereich zu arbeiten. Hierzu können sich beispielsweise IR-Strahler anbieten. Weitere Maßnahmen zum gleichmäßigen Abkühlen der geformten Polymermasse können Vakuumboxen sein, die für ein luftfreies Anlegen der Polymerschmelze auf der Walze sorgen oder auch ein sogenanntes Edge-Pinning, wobei der Randbereich elektrostatisch auf der Walze fixiert wird.

Der Träger weist über das erfindungsgemäße Verfahren nicht nur eine besonders glatte Oberfläche mit einer geringen Rauigkeit, sondern auch eine Oberfläche mit besonders wenigen Lufteinschlüssen auf. Diese beiden Faktoren können zu einem besonders reproduzierbaren und qualitativ hochwertigen dekorierten Trägerendprodukt beitragen. Ohne durch die Theorie gebunden zu sein kann, bedingt durch das relativ geringe Volumen im Walzenspalt zwischen den Walzenpaaren, im Vergleich zu einer flächigen Presse die Luft im Träger deutlich besser entweichen. Dies kann zu besonders lufteinschlussarmen Trägern und Trägeroberflächen führen. Mittels einer zweiten, eingebrachten weiß eingefärbten Polymerschmelze auf der Oberseite des geschmolzenen und extrudierten Polymers, kann ein glatter, lunkerfreier Druckgrund appliziert werden, der entgegen den Lösungen aus dem Stand der Technik nicht durch polymerfremde Duroplasten auflackiert werden muss. Hier ergibt sich der Vorteil, dass dieser aus einer nahezu identischen thermoplastischen Polymermatrix der Trägerplatte besteht. Letzteres kann für ein effizientes Recycling sehr vorteilhaft sein.

In einer Ausgestaltung kann vorgesehen sein, dass ein Aufbringen eines eine Dekorvorlage nachbildenden Dekors auf zumindest einen Teilbereich der siegelfähigen Schicht erfolgt. Das Aufbringen der Dekorvorlage kann nach Durchlauf durch die Walzenanordnung am fertig kalibrierten Träger oder aber auch vor Durchlauf des letzten Walzen-Kalibrierspaltes erfolgen. Der Träger weist über das erfindungsgemäße Verfahren nicht nur eine besonders glatte Oberfläche mit einer geringen Rauigkeit, sondern auch eine Oberfläche mit besonders wenigen Lufteinschlüssen auf. Diese beiden Faktoren können zu einem besonders reproduzierbaren und qualitativ hochwertigen dekorierten Trägerendprodukt beitragen. Ohne durch die Theorie gebunden zu sein kann, bedingt durch das relativ geringe Volumen im Walzenspalt zwischen den Walzenpaaren, im Vergleich zu einer flächigen Presse die Luft im Träger deutlich besser entweichen. Dies kann zu besonders lufteinschlussarmen Trägern und Trägeroberflächen führen. Mittels einer zweiten, eingebrachten weiß eingefärbten Polymerschmelze auf der Oberseite des geschmolzenen und extrudierten Polymers, kann ein glatter, lunkerfreier Druckgrund appliziert werden, der entgegen den Lösungen aus dem Stand der Technik nicht durch polymerfremde Duroplasten auflackiert werden muss. Hier ergibt sich der Vorteil, dass dieser aus einer nahezu identischen thermoplastischen Polymermatrix der Trägerplatte besteht. Letzteres kann für ein effizientes Recycling sehr vorteilhaft sein.

Weiterhin erfolgt ein Aufbringen eines eine Dekorvorlage nachbildenden Dekors auf zumindest einen Teilbereich des Trägers. Dabei kann das Dekor beispielsweise durch einen sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet- oder Laserdruck-Verfahren eingesetzt werden.

Beispielsweise kann, um eine Dekorvorlage auf besonders detailgetreue und hochgenaue Weise in dreidimensionaler Form zu imitieren beziehungsweise nach zu empfinden, das Dekor nach Durchlaufen der Walzenanordnung vorlagenidentisch aufgebracht werden. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Dabei können eine Mehrzahl an Dekorschichten mit zumindest teilweise unterschiedlichem Flächenauftrag auf Basis bereitgestellter dreidimensionaler Dekordaten sukzessive aufgebracht wird.

Ferner können die Dekorschichten aus einer insbesondere strahlungshärtbaren Farbe und/oder Tinte ausgebildet werden. Beispielsweise kann eine UV-härtbare Farbe oder Tinte verwendet werden. In dieser Ausgestaltung kann eine besonders detailgetreue und übereinstimmende Nachbildung der Dekorvorlage erreichbar sein. Zum einen kann auf diese Weise ohne das Vorsehen weiterer Maßnahmen hochgenau eine Synchronpore erzielbar sein. Eine Synchronpore kann dabei insbesondere eine Pore oder eine andersartige Struktur sein, welche räumlich exakt dort angeordnet ist, wo sie optisch dargestellt ist durch ein mit dem optischen Dekormerkmalen übereinstimmenden haptischen Strukturierung. Dies ist im Wesentlichen in dieser Ausgestaltung automatisch der Fall, da die strukturelle Ausgestaltung eben durch die Farbe beziehungsweise Tinte erzeugt wird. Darüber hinaus weisen Dekorvorlagen, wie beispielsweise Holzwerkstoffe, oftmals eine Variation des Farbeindrucks nicht nur entlang ihrer Breite beziehungsweise Länge sondern ebenfalls entlang ihrer Tiefe auf. Auch dieser Farbeindruck beziehungsweise Farbverlauf kann insbesondere in dieser Ausgestaltung besonders detailgetreu nachempfunden werden, was auch den Gesamteindruck des Paneels noch identischer erscheinen lässt. Dabei lässt sich insbesondere dann, wenn die verwendete Farbe beziehungsweise Tinte strahlungshärtbar ist, eine besonders schnelle Verfestigung erreichen, wodurch die Mehrzahl an Schichten schnell aufeinander aufbringbar sein können, was auch den Gesamtprozess in einer geringeren Zeit realisierbar und damit besonders kostengünstig gestalten kann.

Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung oder Elektronenstrahlung, zumindest teilpolymerisiert werden kann.

Dabei können die Dekorschichten jeweils in Dicken von ≥ 5µm bis ≤ 10µm aufgebracht werden.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv- beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

In einer bevorzugten Ausführungsform des Verfahrens kann das Kalibrieren in Verfahrensschritt d) unter Verwendung mindestens eines Hauptwalzenpaares aus zwei Walzen mit größerem Durchmesser und mindestens dreier hintereinander angeordneter Kalibrierwalzen mit im Vergleich zum Hauptwalzenpaar kleineren Durchmesser erfolgen. Zum Erhalt einer möglichst gleichmäßigen Oberflächenstruktur zur Aufnahme des Dekors hat es sich als besonders vorteilhaft herausgestellt, dass über unterschiedliche Walzengrößen das Aufbringen mechanischer und ggf. auch thermischer Kräfte auf den Träger ungleichmäßig ausgestaltet wird. Diese Maßnahme kann zu besonders glatten Trägeroberflächen führen, welche sich besonders einfach und reproduzierbar mit Dekoren versehen lassen. Der Hauptanteil der gewünschten und notwendigen Verformung kann dabei über das größere Walzenpaar erfolgen, wohingegen die weiteren, kleineren Kalibrierwalzen nur noch geringe Kräfte zum Erhalt eines gleichmäßig kalibrierten Produktes ausüben und Luft gesteuert aus dem Träger transportieren. Dadurch lassen sich unter Beibehalt nur geringer Dickenschwankungen des produzierten Trägers hohe Liniengeschwindigkeiten erreichen. Die Walzendurchmesser unterschieden sich im Durchmesser, wenn die entsprechenden Durchmesser von Haupt- und Kalibrierwalzen sich um mindestens 10% unterscheiden. Durch oben genannte Anordnung ergeben sich beispielsweise folgende Spaltanordnungen für das geschmolzene Polymermaterial. Zwingend durchläuft das geschmolzenen Polymermaterial den Spalt zwischen den Hautwalzen, und mindestens die beiden Spalte zwischen den mindestens drei Kalibierwalzen. Die Anordnung kann beispielsweise insgesamt 8, bevorzugt 6, des Weiteren bevorzugt 4 Kalibrierwalzen aufweisen. Diese Anzahl an einzelnen Spalten hat sich zum Erhalt dekorierter Paneele mit verbesserten Oberflächen- und Dekoreigenschaften als besonders geeignet herausgestellt.

Innerhalb einer weiteren Ausgestaltung des Verfahrens kann die Höhe des Kalibrierspalts des Hauptwalzenpaares H_{H} sich um größer oder gleich 10% und kleiner oder gleich 50 % von den Höhen der Kalibrierspalte der Kalibrierwalzen H_{K} unterscheiden. Zum Erhalt besonders glatter Trägeroberflächen und zum Erhalt mechanisch besonders spannungsarmer Trägermaterialien hat sich oben genanntes Spalthöhenverhältnis zwischen Haupt- und Kalibrierwalzen als besonders geeignet herausgestellt. Durch diese Festlegung kann die auf den Träger einwirkende Kraft mitbestimmt werden, sodass für die Walzenanordnung eine zur Herstellung dekorierter Paneele besonders geeignete Kraftverteilung vorgegeben ist. Es ergeben sich dadurch besonders günstige Eigenschaften sowohl in Bezug auf das Vorliegen von Lufteinschlüssen als auch in Bezug auf das Auftreten von Spannungsrissen im Trägermaterial. Zudem scheint auch der Abstand der mechanischen Krafteinwirkung zur Formung des Trägers, in Relation zum Ort des Auftragens des Dekors eine wichtige Rolle zu spielen. Es hat sich dabei in einer bevorzugten Ausführungsform als besonders geeignet herausgestellt, dass die Höhe des oder der Kalibrierspalte um größer oder gleich 10% und kleiner oder gleich 50 % kleiner sind als die Höhe des Hauptwalzenspaltes. Dies kann zu hohen Liniengeschwindigkeiten ohne Verlust der Oberflächenqualität des dekorierten Paneels beitragen.

In einem weiteren Aspekt des Verfahrens kann die Höhe des letzten und/oder des vorletzten Kalibrierspaltes so gewählt werden, dass der Träger um einen Faktor von kleiner oder gleich 10% und größer oder gleich 3% in seiner Höhe komprimiert wird. Zum Erhalt besonders lufteinschlussarmer und besonders glatter Trägeroberflächen hat sich oben angegebenes Kompressionsverhältnis als besonders vorteilhaft herausgestellt. Das Verhältnis lässt sich beispielsweise über eine Dickenmessung des Trägers vor und nach dem Spaltdurchlauf bestimmen. Die gewünschte Kompressionsrate lässt sich dabei über das Höhenprofilverhältnis der Kalibrierwalzenspalte oder aber auch über die aufzubringende Kraft in den einzelnen Walzenspalten einstellen.

In einer weiteren, bevorzugten Ausgestaltung des Verfahrens kann die Walzenanordnung neben dem Hauptwalzenpaar noch mindestens vier weitere Kalibrierwalzen aufweisen, wobei einer der Walzenspalte der Kalibrierwalzen isobar gefahren wird. Entgegen der Fahrweise mit konstanten Spaltdicken zwischen den Kalibrierwalzen, hat es sich für die Oberflächeneigenschaften der Träger als besonders vorteilhaft herausgestellt, dass mindestens einer der Spalte isobar, also mit konstanter Krafteinwirkung auf den Träger, gefahren wird. Dadurch lassen sich sehr schnelle Prozesszeiten unter Beibehalt einer möglichst glatten Trägeroberfläche verwirklichen. Isobare Fahrweise im Sinne der Erfindung meint dabei, dass über die Steuerung der Walzenabstände die Krafteinwirkung auf den Träger im Walzenspalt während der Herstellung des Trägers um kleiner als 10%, bevorzugt kleiner als 5%, des Weiteren bevorzugt um kleiner als 2,5 % schwankt. Die Kräfte zur Herstellung eines Trägers können beispielsweise über einen Kraftsensor an oder in der Walze oder aber mittels eines oder mehrerer Kraftsensoren im Trägermaterial gemessen werden.

Innerhalb eines bevorzugten Aspekts des Verfahrens können die Haupt- und die Kalibrierwalzen temperierbar ausgerüstet sein und die temperierbare Oberfläche der Kalibrierim Vergleich zu den Hauptwalzen um einen Faktor von größer oder gleich 1,1 bis zu kleiner oder gleich 2,5 größer sein. Neben der mechanischen Behandlung der geschmolzenen Polymermasse kann mittels der Walzenanordnung gleichzeitig auch eine thermische Behandlung des Trägers stattfinden. Die thermische Behandlung kann prinzipiell in einem partiellen Erhitzen oder einer partiellen Kühlung des Trägers bestehen. Vorteilhafterweise wird das geschmolzene Material durch die Walzen an der Walzenoberfläche gekühlt. Dies kann beispielsweise dadurch erreicht werden, dass die einzelnen Walzen im Walzeninneren über eine Zufuhr von Wärmeträgern, wie beispielsweise eine Kühlflüssigkeit, verfügen. Des Weiteren ist es vorteilhaft, dass die einzelnen Walzen der Walzenanordnung separat in Ihren Oberflächentemperaturen geregelt werden können. Dies kann zu einem besonders reproduzierbaren und schonenden Formungs- und Abkühlungsprozess beitragen. Das oben angegebene Verhältnis der Kühlflächen zwischen Haupt- und Kalibrierwalzen hat sich als besonders geeignet herausgestellt, um besonders mechanisch spannungsarme dekorierte Paneele mit besonders wenigen Lufteinschlüssen zu erhalten. Ohne durch die Theorie gebunden zu sein ergeben sich die qualitativ hochwertigeren Dekore über die in den einzelnen Schritten gesteuert abgeführte Wärmemenge, welche auch proportional zur Oberfläche der Walzenpaare ist. Innerhalb dieses Bereiches lassen sich zudem sehr hohe Bahngeschwindigkeiten und ein besonders effizientes Austreiben von Lufteinschlüssen aus den Trägern realisieren. Des Weiteren können die einzelnen Walzentemperaturen, und demzufolge auch die an diesen erreichbaren Abkühlraten, als Funktion der auf den Träger ausgeübten mechanischen Kraft gewählt werden. Größere Krafteinwirkungen, beispielsweise durch hohe Kompressionen des Trägermaterials, können durch einen höheren Temperaturgradienten zwischen Walze und Trägermaterial begleitet werden, sodass in Summe ein mechanisch spannungsärmerer Träger erhalten wird.

Bevorzugt kann vorgesehen sein, dass das Verfahren weiter die Verfahrensschritte aufweist: e) Aufbringen einer Folie auf zumindest einen Teilbereich der siegelfähigen Schicht des plattenförmigen Trägers. Dadurch kann der plattenförmige Träger weiter modifiziert werden, um ihm gewünschte Eigenschaften, insbesondere optische und haptische Eigenschaften, zu verleihen.

Es kann in einer Ausgestaltung vorgesehen sein, dass das Verfahren mehrere Verfahrensschritte e) aufweist. Demnach kann vorgesehen sein, dass in dem Verfahren mehrere Folien auf zumindest einen Teilbereich der siegelfähigen Schicht des plattenförmigen Trägers aufgebracht werden. Dabei kann insbesondere vorgesehen sein, dass eine erste aufgebrachte Folie die siegelfähige Schicht kontaktiert, und jede weitere aufgebrachte Folie die entsprechend zuvor aufgebrachte Folie kontaktiert.

Bevorzugt kann vorgesehen sein, dass die Folie zumindest eine Deckschicht aufweist, wobei die Deckschicht vorzugsweise ein eine Innenseite, eine Außenseite und eine optional auf die Innenseite der Deckschicht aufgebrachte Dekorschicht aufweist, wobei die Folie derart auf die siegelfähige Schicht aufgebracht wird, dass die Außenseite der Deckschicht dem plattenförmigen Träger abgewandt ist. Dadurch kann der plattenförmige Träger besonders einfach und effizient mit einem Dekor versehen werden.

Die Folie kann die Dekorschicht insbesondere aufweisen, wenn in dem Verfahren ansonsten keine Dekor auf die siegelfähige Schicht der Trägerplatte aufgebracht wird.

Bevorzugt kann vorgesehen sein, dass die Deckschicht ein drittes Vinylpolymer aufweist, vorzugsweise im Wesentlichen daraus besteht, wobei das dritte Vinylpolymer ein Homo- oder ein Copolymer sein kann, wobei das Vinylpolymer bevorzugt ein polypropylembasiertes Vinylpolymer aufweist, besonders bevorzugt ein Polypropylen Copolymer, bevorzugt ausgewählt aus der Gruppe bestehend aus einem Propylen-Ethylen-Random-Copolymer, ein Propylen-Ethylen-Block-Copolymer, und einem Polypropylen-Ethylen-Butylen-Copolymer.

Bevorzugt kann vorgesehen sein, dass die Deckschicht eine mehrlagige Struktur aus unterschiedlichen Vinylpolymeren aufweisen kann, insbesondere aus unterschiedlichen Propylenpolymeren.

Bevorzugt kann vorgesehen sein, dass die Deckschicht eine Dicke aufweist in einem Bereich von größer oder gleich 10 µm bis kleiner oder gleich 1000 µm, bevorzugt größer oder gleich 50 µm bis kleiner oder gleich 750 µm, besonders bevorzugt von größer oder gleich 100 µm bis kleiner oder gleich 500 µm.

Es konnte gezeigt werden, dass sich derartige Deckschichten besonders gut für das vorbeschriebene Verfahren eignen, da sie einerseits gute Verschleißeigenschaften aufweisen und sich andererseits gut verarbeiten lassen und entsprechend aufgebrachte Dekore aufweisen können.

In einer bevorzugten Ausgestaltung kann vorgesehen sein, dass die Deckschicht der Folie eine Oberflächenstrukturierung aufweist. Dadurch kann im weiteren Verfahrensverlauf auf eine Strukturierung der Deckschicht verzichtet werden. Somit kann das Verfahren besonders flexibel betrieben werden.

Bevorzugt kann vorgesehen sein, dass die Dekorschicht ein eine Dekorvorlage nachbildendes Dekor aufweist. Dabei kann das Dekor durch einen sogenannten Direktdruck aufgebracht worden sein. Unter dem Begriff "Direktdruck" wird im Sinne der Erfindung das Aufbringen eines Dekors direkt auf die Innenseite der Deckschicht verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet- oder Laserdruck-Verfahren eingesetzt werden. Besonders bevorzugt kann vorgesehen sein, dass das Dekor durch Roll-to-Roll Digitaldruck, Tiefdruck oder Flexodruck im Konterdruckverfahren hergestellt wurde.

Bevorzugt kann vorgesehen sein, dass die Dekorschicht thermisch siegelfähige Druckfarben aufweist. Unter thermisch siegelfähigen Druckfarben sind im Sinne der vorliegenden Erfindung insbesondere auch laminierbare Tinen zu verstehen. Beispielsweise kann vorgesehen sein, dass die laminierbaren Tinten aufweist, eine strahlungshärtbare Tinte vorzugsweise in einer Menge, bezogen auf die laminierbare Tinte, von ≥ 50 Gew.-% bis ≤ 99 Gew.-%, vorzugsweise ≥ 70 Gew.-% bis ≤ 95 Gew.-%, besonders bevorzugt von ≥ 80 Gew.-% bis ≤ 90 Gew.-%, und ein thermisch aktivierbares Matrixmaterial vorzugsweise in einer Menge, bezogen auf die laminierbare Tinte, von ≥ 1 Gew.-% bis ≤ 50 Gew.-%, vorzugsweise ≥ 5 Gew.-% bis ≤ 30 Gew.-%, besonders bevorzugt von ≥ 10 Gew.-% bis ≤ 20 Gew.-%, wobei das Matrixmaterial zumindest ein thermisch aktivierbares Polymer aufweist, vorzugsweise in einer Menge, bezogen auf die laminierbare Tinte, von ≥ 1 Gew.-% bis ≤ 30 Gew.-%, vorzugsweise ≥ 5 Gew.-% bis ≤ 20 Gew.-%, besonders bevorzugt von ≥ 10 Gew.-% bis ≤ 15 Gew.-%.

Dadurch kann insbesondere erreicht werden, dass auf einen Kaschierklebstoff oder eine Kaschierschicht verzichtet werden kann.

In einer bevorzugten Ausgestaltung kann vorgesehen sein, dass die Folie eine Kaschierschicht aufweist, wobei die Kaschierschicht vorzugsweise auf die auf die Innenseite der Deckschicht aufgebrachte Dekorschicht aufgebracht ist, wobei die Kaschierschicht besonders bevorzugt über einen Kaschierklebstoff mit der Dekorschicht verbunden ist. Dadurch kann erreicht werden, dass die Dekorschicht weniger spezielle Anforderungen erfüllen muss.

Bevorzugt kann vorgesehen sein, dass die Kaschierschicht ein viertes Vinyl-Copolymer aufweist, bevorzugt ein Vinyl-Terpolymer, mehr bevorzugt ein polypropylenbasiertes Vinyl-Copolymer, besonders bevorzugt ein Polypropylen-Ethylen-Butylen-Copolymer.

Bevorzugt kann vorgesehen sein, dass das vierte Vinyl-Copolymer so definiert ist wie das dritte Vinyl-Copolymer. Besonders bevorzugt kann vorgesehen sein, dass das vierte Vinyl-Copolymer das gleiche ist wie das dritte Vinyl-Copolymer.

In einer alternativen bevorzugten Ausgestaltung kann vorgesehen sein, dass die Folie keine Kaschierschicht aufweist. Dadurch kann erreicht werden, dass die Folie einfacher herzustellen ist.

Bevorzugt kann vorgesehen sein, dass die Folie während des Kalibrierens in Verfahrensschritt d) aufgebracht wird, wobei bevorzugt die Folie nach dem ersten Walzenpaar aufgebracht wird, und bevorzugt vor der sechsten Kalibrierwalze, mehr bevorzugt vor der fünften, besonders bevorzugt vor der vierten, insbesondere vor der dritten Kalibrierwalze.

Dadurch kann erreicht werden, dass die Folie einerseits beim Kalibrieren besonders gut mit dem plattenförmigen Träger verbunden wird und andererseits auf eine besondere Temperaturführung des plattenförmigen Trägers weitgehend verzichtet werden kann. Dadurch ist das Verfahren besonders einfach und kostensparend.

In einer alternativen, bevorzugten Ausgestaltung kann vorgesehen sein, dass die Folie nach dem Kalibrieren in Verfahrensschritt d) aufgebracht wird, wobei bevorzugt die Folie mit einem dem Kalibrierschritt nachgelagertem Kalander aufgebracht wird. Dadurch kann der Verfahrensschritt mechanisch entkoppelt von den vorherigen Verfahrensschritten erfolgen Der plattenförmige Träger kann dabei noch Restwärme aufweisen, wodurch Energie gespart werden kann. Zugleich kann durch die mechanisch entkoppelte Durchführung die Prozessteuerung besonders einfach erfolgen.

Bevorzugt kann vorgesehen sein, dass die Folie als Rollenware bereitgestellt wird. Dafür kann bevorzugt vorgesehen sein, dass die Folie mit einer Abwickelstation bereitgestellt wird, wobei die Abwickelstation bevorzugt mit einer automatischen Bahnkantensteuerung ausgestattet ist. Bevorzugt kann vorgesehen sein, dass die Abwickelstation redundant aufgebaut ist, so dass das Bereitstellen der Folie einen automatischen Rollenwechsel am Ende einer Folienrolle umfasst, wobei das Ende der einen Folie mit dem Anfang der neuen insbesondere mit einem automatischen Spleißprozess erfolgt.

Bevorzugt kann vorgesehen sein, dass mehrere Folien parallel nebeneinander über die Breite des plattenförmigen Trägers aufgebracht werden, wobei die Abwickelstation insbesondere eine Doppel-Abwickelstation ist. Dieses Verfahren eignet sich besonders für sehr breite plattenförmige Träger, da so die Prozessführung einfacher sein kann.

Bevorzugt kann vorgesehen sein, dass die Folie vor dem Aufbringen auf zumindest einen Teilbereich der siegelfähigen Schicht des plattenförmigen Trägers vorgewärmt wird, bevorzugt auf eine Temperatur in einem Bereich von größer oder gleich Raumtemperatur bis kleiner oder gleich 160 °C, mehr bevorzugt größer oder gleich 50 °C bis kleiner oder gleich 155 °C, noch mehr bevorzugt größer oder gleich 100 °C bis kleiner oder gleich 150 °C, besonders bevorzugt von größer oder gleich 125 °C bis kleiner oder gleich 145 °C. Dadurch kann erreicht werden, dass die Folie besser am plattenförmigen Träger haftet.

Bevorzugt kann vorgesehen sein, dass das Vorwärmen der Folie mit elektromagnetischer Strahlung erfolgt, insbesondere mit Strahlung im Infrarot und/oder Nahinfrarotbereich.

Bevorzugt kann vorgesehen sein, dass die siegelfähigen Schicht des plattenförmigen Trägers beim Aufbringen der Folie eine Temperatur aufweist in einem Bereich von größer oder gleich 105 °C bis kleiner oder gleich 160 °C, bevorzugt größer oder gleich 110 °C bis kleiner oder gleich 140 °C, mehr bevorzugt größer oder gleich 115 °C bis kleiner oder gleich 130 °C, besonders bevorzugt größer oder gleich 120 °C bis kleiner oder gleich 125 °C. Dadurch kann erreicht werden, dass die Folie besser am plattenförmigen Träger haftet.

Bevorzugt kann vorgesehen sein, dass das Aufbringen der Folie bei einer Temperatur unterhalb eines Schmelzpunktes der zweiten Polymermasse erfolgt.

Bevorzugt kann vorgesehen sein, dass das Verfahren weiter den Schritt f) Strukturieren der Deckschicht aufweist, wobei die Deckschicht bevorzugt mit einer strukturierten Walze eines Prägekalanders erfolgt. Dadurch kann erreicht werden, dass die Deckschicht mit einer besonders angenehmen Haptik versehen wird, wodurch ein besonders wertiger Eindruck entsteht.

Bevorzugt kann vorgesehen sein, dass das Strukturieren nach dem Kalibrieren in Verfahrensschritt d) erfolgt, wobei bevorzugt das Strukturieren unmittelbar nach dem Kalibrieren erfolgt. Dadurch kann erreicht werden, dass im Wesentlichen keine besondere Temperaturführung notwendig ist. Insbesondere kann dadurch erreicht werden, dass der plattenförmige Träger, bzw. die Deckschicht, nicht erneut aufgewärmt werden muss.

Bevorzugt kann vorgesehen sein, dass das Strukturieren die Deckschicht mit einer All-Over-Struktur versieht. Es konnte gezeigt werden, dass sich diese Art der Struktur besonders für das vorbeschriebene Verfahren eignet, da dafür keine besondere Abstimmung von Dekor und Struktur notwendig ist.

Bevorzugt kann vorgesehen sein, dass das Strukturieren bei einer Temperatur erfolgt, die kleiner ist als die Temperatur der siegelfähigen Schicht des plattenförmigen Trägers beim Aufbringen der Folie. Bevorzugt kann vorgesehen sein, dass das Strukturieren bei einer Temperatur erfolgt, in einem Bereich von größer oder gleich 60 °C bis kleiner oder gleich 140 °C, bevorzugt größer oder gleich 80 °C bis kleiner oder gleich 120 °C, besonders bevorzugt von größer oder gleich 90 °C bis kleiner oder gleich 110 °C.

In einem weiteren Schritt kann dann die mit einem Dekor versehen Trägerplatte durch geeignete mechanische Verfahren in einzelne Paneele aufgeteilt werden. Dies kann beispielsweise durch ein Schneiden des extrudierten Stranges nach regelmäßigen Abständen oder nach regelmäßigen Zeiten erfolgen. Bevorzugt können durch diesen Verfahrensschritt gleichlange, geschnittene Paneele erzeugt werden.

Des Weiteren erfindungsgemäß ist eine Vorrichtung zur Herstellung eines dekorierten Wand- oder Bodenpaneels, wobei die Vorrichtung Mittel zum Durchführen des erfindungsgemäßen Verfahrens aufweist.

Für die Vorteile der erfindungsgemäßen Vorrichtung wird explizit auf die Vorteile des erfindungsgemäßen Verfahrens Bezug genommen. Eine bevorzugte Ausgestaltung für die Vorrichtung kann zum Bereitstellen jeder der geschmolzenen Polymermassen einen temperierbaren Schneckenextruder aufweisen.

Bevorzugt kann vorgesehen sein, das die Vorrichtung einen Feedblock und oder eine Mehrkanaldüse aufweist, insbesondere einen Feedblock. Weiter bevorzugt kann vorgesehen sein, dass die Vorrichtung eine in Ihrem Profil veränderliche Breitschlitzdüse umfasst..

Des Weiteren kann die Vorrichtung über temperier- und insbesondere kühlbare Walzen verfügen. Die einzelnen Walzen können sich in ihren Positionen im Produktionsprozess relativ zueinander bewegen lassen und demzufolge lassen sich auch die sich zwischen den Walzen ausbildenden Walzenspalte in ihren Dimensionen verändern. Bevorzugt kann zur Formung und Kalibrierung des Trägers mindestens ein größeres Hauptwalzenpaar und mehrere, bevorzugt mindestens 3, weiter bevorzugt 4, des Weiteren bevorzugt 5 weitere, kleinere Kalibrierwalzen eingesetzt werden. Die Walzen können jeweils separat in ihren Temperaturen einstellbar ausgerüstet sein.

Die Vorrichtung kann zudem weitere Mittel zur endgültigen Kühlung des Trägers aufweisen. Es ist zudem auch möglich, dass die Vorrichtung auch weitere Mittel aufweist, um die vom Träger abgeführte Wärme wieder in den Produktkreislauf zurückzuführen. Dies kann beispielsweise über Wärmetauscher erfolgen. Die gewonnene Abwärme kann beispielsweise zur Temperierung des Extruders eingesetzt werden. Zusätzlich kann die Vorrichtung noch weitere Mittel zur mechanischen Bearbeitung des Trägers, beispielsweise zur speziellen Profilierung der Trägerkanten aufweisen. Weiterhin kann die Vorrichtung weitere Mittel zur Unterteilung der extrudierten Platte in kleinere, im Wesentlichen gleich lange Paneele aufweisen. Dieses Aufteile oder Schneiden kann beispielsweise durch seine Säge erfolgen. Dazu können sich beispielsweise Kreis- oder Bandsägen anbieten. Es ist aber auch möglich, dass die extrudierte und mit einem Dekor versehen Platte durch andere physikalische Mittel, wie beispielsweise ein Laser, in kleinere Paneele unterteilt wird.

Des Weiteren erfindungsgemäß ist ein plattenförmiger Träger für ein dekoriertes Wand- oder Bodenpaneel, hergestellt nach dem erfindungsgemäßen Verfahren, aufweisend zumindest eine Trägerschicht umfassend die erste Polymermasse und eine die Trägerschicht kontaktierende siegelfähige Schicht umfassend die zweite Polymermasse.

Für die Vorteile der erfindungsgemäßen plattenförmigen Trägers wird explizit auf die Vorteile des erfindungsgemäßen Verfahrens und auf die Vorteile der erfindungsgemäßen Vorrichtung Bezug genommen.

Insbesondere ist darauf hinzuweisen, dass mit sehr hohen Liniengeschwindigkeiten über das erfindungsgemäße Verfahren plattenförmige Träger erhältlich sind, welche sich durch besonders glatte Oberflächen und einen geringen Luftanteil in und in Form von Poren an der Oberfläche der Träger auszeichnen. Die Anzahl und Größe durch Luft bedingter Oberflächendefekte kann signifikant reduziert werden. Es ergeben sich durch die Temperaturführung und die mechanische Behandlung zudem sehr spannungsarme Träger. Das Verfahren und die Vorrichtung sind zudem für die Verarbeitung unterschiedlichster Materialien geeignet.

Des Weiteren erfindungsgemäß ist ein Wand- oder Bodenpaneel, hergestellt nach dem erfindungsgemäßen Verfahren.

Für die Vorteile der erfindungsgemäßen Wand- und Bodenpaneele wird explizit auf die Vorteile des erfindungsgemäßen Verfahrens und auf die Vorteile der erfindungsgemäßen Vorrichtung Bezug genommen.

Insbesondere ist darauf hinzuweisen, dass mit sehr hohen Liniengeschwindigkeiten über das erfindungsgemäße Verfahren Paneele erhältlich sind, welche sich durch besonders glatte Oberflächen und einen geringen Luftanteil in und in Form von Poren an der Oberfläche der Paneele auszeichnen. Die Anzahl und Größe durch Luft bedingter Oberflächendefekte kann signifikant reduziert werden. Es ergeben sich durch die Temperaturführung und die mechanische Behandlung zudem sehr spannungsarme Träger. Das Verfahren und die Vorrichtung sind zudem für die Verarbeitung unterschiedlichster Materialien geeignet.

Hinsichtlich weiterer technischer Merkmale und Vorteile des Wand- oder Bodenpaneels wird hiermit explizit auf die Beschreibung des Verfahrens, der Vorrichtung, sowie auf die Figuren Bezug genommen.

Die Erfindung ist nachfolgend anhand der Figuren sowie eines Ausführungsbeispiels weiter erläutert.
- Fig. 1: zeigt schematisch eine apparative Ausgestaltung zur Durchführung des erfindungsgemäßen Verfahrens im Querschnitt;
- Fig. 2: zeigt schematisch eine apparative Ausgestaltung zur Durchführung des erfindungsgemäßen Verfahrens in der Aufsicht;
- Fig. 3: zeigt schematisch die Führung geschmolzenen Polymermaterials durch eine Kalibrierwalzenanordnung;
- Fig. 4: zeigt schematisch die Führung geschmolzenen Polymermaterials durch eine Kalibrierwalzenanordnung;
- Fig. 5: zeigt schematisch die Führung geschmolzenen Polymermaterials durch eine Kalibrierwalzenanordnung mit einem vergrößerten Ausschnitt; und
- Fig. 6: zeigt schematisch eine Möglichkeit zur Durchführung des erfindungsgemäßen Verfahrens im Querschnitt.

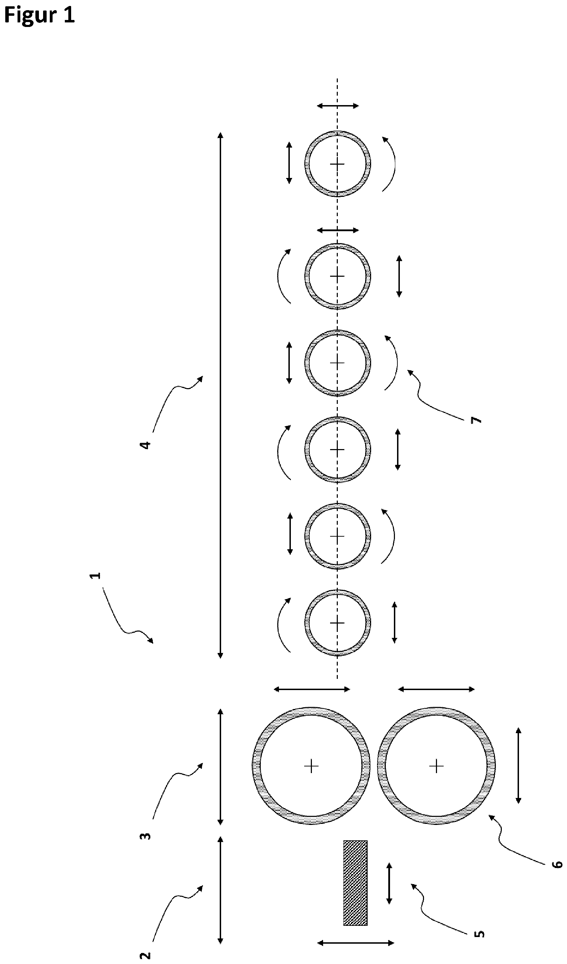

Die Vorrichtung 1 nach Figur 1 ist für ein Verfahren zur Herstellung eines dekorierten Wand- oder Bodenpaneels geeignet. Die Figur 1 zeigt im Querschnitt den möglichen Aufbau der Vorrichtung zur Herstellung dekorierter Paneele 1, wobei in dieser Figur besonders die Baugruppen Extrusionsvorrichtung 2 mit Düse 5, Hauptwalzenpaar 3 und Kalibrierwalzenanordnung 4 dargestellt sind. In dieser Ausführungsform sind 6 Kalibrierwalzen 7 dargestellt, welche sich jeweils unabhängig voneinander in ihren X-, und Y-Positionen steuern lassen. Eine mögliche Drehrichtungsabfolge für die einzelnen Kalibrierwalzen 7 ist durch die Pfeile angedeutet. Die Vorrichtung 1 zeigt schematisch die Extrusionsvorrichtung 2, welche sich für jede geschmolzene Polymermasse in einen Extruder (nicht separat dargestellt) zur thermischen Behandlung von Polymergranulat und der eigentlichen Düse 5 aufteilt, wobei die Düse eine Mehrkanaldüse ist oder optional ein Feedblock zwischen den Extrudern und der Düse oder der Mehrkanaldüse angeordnet ist (nicht gezeigt) durch die die geschmolzenen Polymermassen schichtweise übereinandergelegt werden. Der aus der Düse austretende geschmolzene Polymerstrang kann durch den Walzenspalt der Hauptwalzenanordnung 3 mit den einzelnen Hauptwalzen 6 geführt werden. Die Höhe des Walzenspalts zwischen den beiden Hauptwalzen 6 ist durch die Bewegung der Hauptwalzen 6 zueinander variabel einstellbar. Nachdem die schichtweise übereinandergelegten geschmolzenen Polymermassen durch den Hauptwalzenspalt eine erste Formung und gegebenenfalls auch Kühlung erfahren hat, wird der Strang zur Kalibrierwalzenanordnung 4 übergeben. In der Kalibrierwalzenanordnung 4 wird der geschmolzene Polymerstrang weiter in seiner Höhe reduziert oder kalibriert. Der Strang wird dabei durch die Spalte zwischen den einzelnen Kalibrierwalzen 7 geführt und als Funktion des Spaltabstandes in seiner Höhe verändert. Die einzelnen Kalibrierwalzen 7 müssen dabei zueinander nicht immer den gleichen Abstand aufweisen, sodass unterschiedliche Spalthöhen zwischen den Kalibrierwalzen 7 während des Verfahrens einstellbar sind. Die Kalibrierwalzen 7 müssen auch nicht die gleiche Höhe aufweisen, sondern können zueinander auch versetzt angeordnet sein. Dies kann die mechanischen Streckeigenschaften des geschmolzenen Polymerstranges verändern. Nach der Kalibrierung durch die Hauptwalzenanordnung 3 und die einzelnen Kalibrierwalzen 7 kann das kalibrierte und geglättete Material über eine Druckeinheit (nicht dargestellt) mit einem Dekor versehen werden. Des Weiteren kann die dekorierte Oberfläche des Paneels mit einer oder gegebenenfalls weiteren Schichten, wie beispielsweise Schutzschichten, versehen werden.

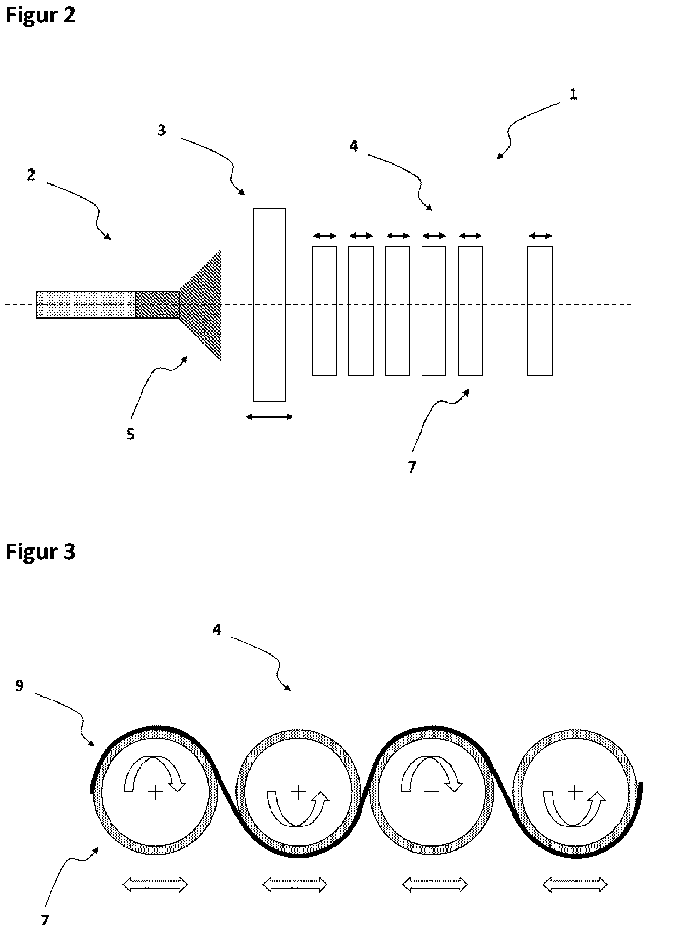

Die Figur 2 zeigt eine Aufsicht auf eine erfindungsgemäße Vorrichtung 1. Dargestellt ist die Extrusionsvorrichtung 2, mit Extruder und Düse, welche einen geschmolzenen Polymerstrang schichtweise übereinandergelegter Polymermassen an die Hauptwalzenanordnung 3 übergibt. Der Abstand zwischen Hauptwalzenanordnung 3 und Extrusionsvorrichtung 2 ist variabel und kann, beispielsweise über gesteuerte elektrische Motoren, variiert werden. Nach Durchlauf der geschmolzenen polymeren Masse durch den Spalt der Hauptwalzenanordnung 3, wird der durch die Hauptwalzenanordnung 3 in seiner Höhe und gegebenenfalls schon etwas gekühlte Träger in die Kalibrierwalzenanordnung 4 geführt. Die Kalibrierwalzenanordnung 4 setzt sich aus den einzelnen Kalibrierwalzen 7 zusammen, welche untereinander jeweils Spalte ausbilden, durch welche der ankalibrierte Träger geführt und weiter geformt wird. Die einzelnen Kalibrierwalzen 7 können insgesamt oder jede separat in ihrer relativen Position zueinander gefahren werden. Des Weiteren ist es möglich, dass die einzelnen Kalibrierwalzen 7 insgesamt oder jede separat in ihrer Walzenoberflächentemperatur geregelt werden.

Die Figur 3 zeigt eine mögliche Führung des geschmolzenen polymeren Trägers 9 durch die Kalibrierwalzenspalte. Durch die Auflage auf die Kalibrierwalzen 7 kann der geschmolzene polymere Träger 9 beispielsweise gekühlt werden. In dieser Anordnung der einzelnen Kalibrierwalzen 7 wird der geschmolzene polymere Träger 9 eher durch den mechanischen Zug der Walzen in seiner Dicke verändert. Die einzelnen Kalibrierwalzen 7 liegen zu weit auseinander, auf das der geschmolzene polymere Träger 9 durch den Spalt zwischen den Kalibrierwalzen 7 eine direkte Quetschung oder Stauchung erfahren würde.

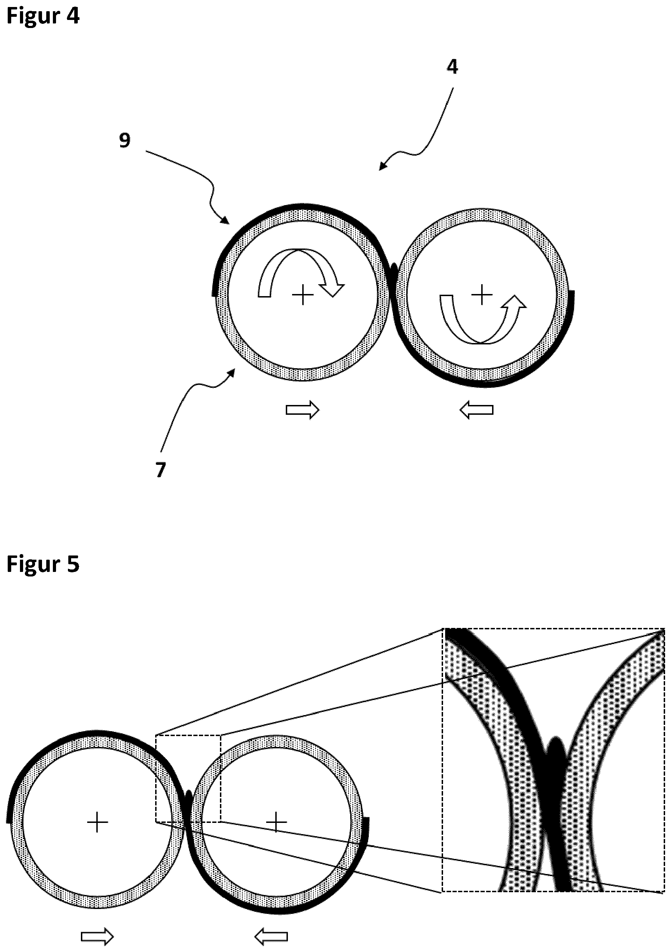

Die Figur 4 zeigt eine ähnliche Kalibrierwalzenanordnung 4 mit zwei Kalibrierwalzen 7 wie in der Figur 3, wobei die Kalibrierwalzen 7 enger zusammenstehen und einen Spalt ausbilden, welcher kleiner ist als die Dicke des geschmolzenen polymeren Trägers 9. Dadurch, dass der geschmolzene polymere Träger 9 zumindest partiell dicker ist als der Kalibrierspalt, wird die Höhe des geschmolzenen polymeren Trägers 9 durch den Kalibrierspalt zwischen den Kalibrierwalzen 7 vergleichmäßigt.

Die Figur 5 zeigt noch einmal den Kalibrierwalzen-Ausschnitt der Figur 4 zusammen mit einem vergrößerten Ausschnitt. Im vergrößerten Ausschnitt ist zu erkennen, dass sich überschüssiges Material des geschmolzenen polymeren Trägers 9 am Beginn des Kalibrierspaltes aufschiebt. Dadurch wird die Höhe des geschmolzenen polymeren Trägers 9 an die Höhe des Kalibrierspaltes angepasst. Durch den Abstand der Kalibrierwalzen 7 lässt sich die Höhe des Kalibrierspaltes und somit die Trägerhöhe einstellen. Erfindungsgemäß vorteilhaft ist, dass die Kalibrierwalzen 7 so eng zusammenstehen, dass möglichst wenig Umgebungsluft zwischen die Kalibrierwalzen 7 und den geschmolzenen polymeren Träger 9 gelangen kann. Durch den engen Spaltdurchlauf wird sichergestellt, dass möglichst wenig zusätzliche Luft in die Trägeroberfläche gepresst wird. Letzteres kann zu einer verbesserten kalibrierten Trägeroberfläche beitragen.

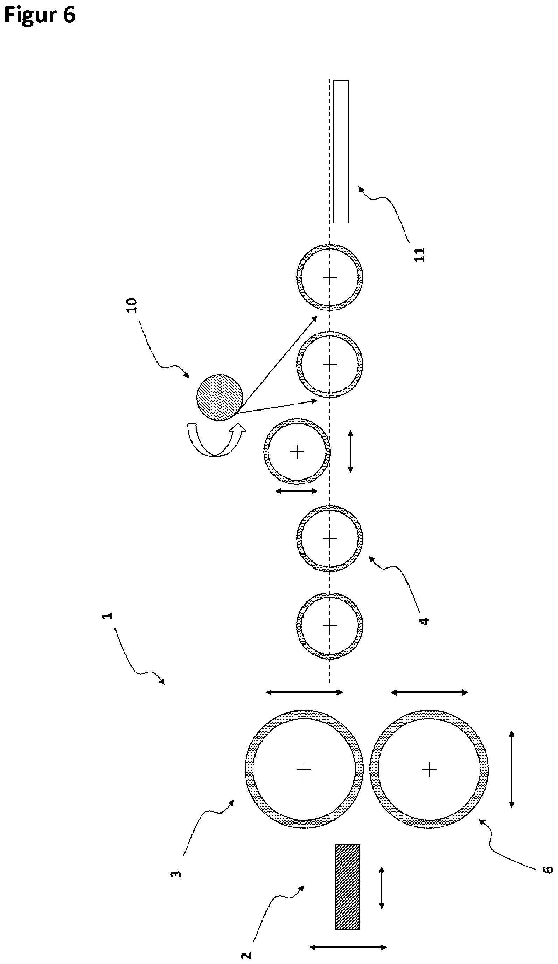

Die Figur 6 zeigt eine weitere erfindungsgemäße Ausgestaltung einer Vorrichtung 1 zur Herstellung dekorierter Paneele. Die Vorrichtung 1 weist ebenfalls eine Extrusionsvorrichtung 2, beispielsweise mit eine Breitschlitzdüse und einem Extruder, auf. Die geschmolzene polymere Masse wird durch die Düse extrudiert und gelangt über den Spalt der Hauptwalzen-3 zu der Kalibrierwalzenanordnung 4 mit den einzelnen Kalibrierwalzen 7. In dieser Figur ist dargestellt, dass sich die einzelnen Kalibrierwalzen 7 nicht zwangsläufig auf eine Höhe zueinander befinden müssen. Durch die Auslenkung einer Kalibrierwalze 7 in der Höhe können beispielsweise die mechanischen Kräfte und auch die Kühleigenschaften über eine Luftstrecke verändert werden. Des Weiteren zeigt die Figur, dass innerhalb der Kalibrierwalzenanordnung 4 mit den unterschiedlichen Kalibrierwalzen 7 eine Folie 10 auf zumindest einen Teilbereich der Siegelfähigen Schicht des plattenförmigen Trägers aufgebracht werden kann, welche beispielsweise als Rollenware vorliegt und an den unterschiedlichsten Stellen der Kalibrierwalzenanordnung 4 eingebracht werden kann. Durch das Auftragen Folie 10 innerhalb der Kalibrierwalzenanordnung 4, kann eine zusätzliche mechanische Behandlung der Schicht durch die Kalibrierwalzen 7 erfolgen, welches zu einer besseren Haftung der Folie auf den Träger führen kann. Des Weiteren kann derart sichergestellt werden, dass durch das Aufbringen der Folie 10 der Träger in der Höhe nicht von den gewünschten Dimensionen abweicht, da sowohl Träger wie auch Folie 10 durch den letzten Kalibrierspalt laufen. Nach dem Aufbringen der Folie 10, kann der Träger über weitere Mittel 11 entweder weiter definiert temperiert/gekühlt oder mechanisch nachbearbeitet wird. Dazu können sich als weitere Mittel 11 Kühl- oder Temperierflächen oder mechanische Fräsen zur weiteren Profilierung, beispielsweise der Trägerkanten, eignen.

### Bezugszeichen:

- 1: Vorrichtung
- 2: Extrusionsvorrichtung
- 3: Hauptwalzenanordnung
- 4: Kalibrierwalzenanordnung
- 5: Düse
- 6: Hauptwalze
- 7: Kalibrierwalze
- 9: geschmolzener polymerer Träger
- 10: Folie
- 11: weitere Nachbearbeitung

## Patentansprüche

1. Verfahren zur Herstellung eines dekorierten Wand- oder Bodenpaneels, aufweisend die Verfahrensschritte:
a) Bereitstellen einer ersten geschmolzenen Polymermasse und einer zweiten geschmolzenen Polymermasse;
b) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
c) Austreiben der schichtweise übereinandergelegten geschmolzenen Polymermassen durch eine Düse;
d) Kalibrieren der schichtweise übereinandergelegten geschmolzenen Polymermassen unter Ausbildung eines plattenförmigen Trägers aufweisend zumindest eine Trägerschicht umfassend die erste Polymermasse und eine die Trägerschicht kontaktierende siegelfähige Schicht umfassend die zweite Polymermasse.

2. Verfahren nach Anspruch 1, wobei die erste Polymermasse ein Feststoffmaterial aufweist, wobei das Feststoffmaterial bevorzugt ein Schichtsilikatpulver aufweist, wobei das Feststoffmaterial besonders bevorzugt Talkum aufweist.

3. Verfahren nach einem der Ansprüche 1 oder 2, wobei die zweite Polymermasse ein drittes Vinyl-Copolymer aufweist, wobei das dritte Vinyl-Copolymer bevorzugt ein Vinyl-Terpolymer umfasst, mehr bevorzugt ein polypropylenbasiertes Vinyl-Copolymer, besonders bevorzugt ein Polypropylen-Ethylen-Butylen-Copolymer.

4. Verfahren nach einem der Ansprüche 1 bis 3, wobei in Schritt a) zusätzlich eine dritte geschmolzene Polymermasse bereitgestellt wird und der in Schritt d) ausgebildete plattenförmige Träger zusätzlich zumindest eine die Trägerschicht kontaktierende Gegenzugschicht aufweist umfassend die dritte Polymermasse.

5. Verfahren nach einem der Ansprüche 1 bis 4, wobei die geschmolzenen Polymermassen derart extrudiert werden, dass die Trägerschicht eine Schichtdicke aufweist von größer oder gleich 60 % bis kleiner oder gleich 95 % der Dicke des plattenförmigen Trägers, insbesondere kleiner oder gleich 90 %.

6. Verfahren nach einem der Ansprüche 1 bis 5, wobei das Kalibrieren mittels einer Anordnung aus mehreren rotierbaren Walzen erfolgt, wobei die einzelnen Walzen über- oder hintereinander angeordnet sind und jede einzelne Walze mit benachbarten Walzen mindestens einen Kalibrierspalt ausbildet durch welchen die schichtweise übereinandergelegten geschmolzenen Polymermassen geführt werden, wobei die Kalibrierspalt-Höhen über eine horizontale und/oder vertikale Bewegung einzelner Walzen während des Herstellungsprozesses variabel einstellbar sind.

7. Verfahren nach einem der Ansprüche 1 bis 6, wobei das Verfahren weiter die Verfahrensschritte aufweist:
e) Aufbringen einer Folie auf zumindest einen Teilbereich der siegelfähigen Schicht des plattenförmigen Trägers.

8. Verfahren nach Anspruch 7, wobei die Folie zumindest eine Deckschicht aufweist, wobei die Deckschicht vorzugsweise eine Innenseite, eine Außenseite und eine optional auf die Innenseite der Deckschicht aufgebrachte Dekorschicht aufweist, wobei die Folie derart auf die siegelfähige Schicht aufgebracht wird, dass die Außenseite der Deckschicht dem plattenförmigen Träger abgewandt ist.

9. Verfahren nach Anspruch 8, wobei die Deckschicht ein drittes Vinylpolymer aufweist, vorzugsweise im Wesentlichen daraus besteht, wobei das dritte Vinylpolymer ein Homo- oder ein Copolymer sein kann, wobei das dritte Vinylpolymer bevorzugt ein polypropylembasiertes Vinylpolymer aufweist, besonders bevorzugt ein Polypropylen Copolymer, bevorzugt ausgewählt aus der Gruppe bestehend aus einem Propylen-Ethylen-Random-Copolymer, ein Propylen-Ethylen-Block-Copolymer, und einem Polypropylen-Ethylen-Butylen-Copolymer.

10. Verfahren nach einem der Ansprüche 7 bis 9, wobei die Folie eine Kaschierschicht aufweist, wobei die Kaschierschicht vorzugsweise auf die auf die Innenseite der Deckschicht aufgebrachte Dekorschicht aufgebracht ist, wobei die Kaschierschicht besonders bevorzugt über einen Kaschierklebstoff mit der Dekorschicht verbunden ist.

11. Verfahren nach einem der Ansprüche 7 bis 10, wobei die Folie während des Kalibrierens in Verfahrensschritt d) aufgebracht wird, wobei bevorzugt die Folie nach dem ersten Walzenpaar aufgebracht wird, und bevorzugt vor der sechsten Kalibrierwalze, mehr bevorzugt vor der fünften, besonders bevorzugt vor der vierten, insbesondere vor der dritten Kalibrierwalze.

12. Verfahren nach einem der Ansprüche 8 bis 11, wobei das Verfahren weiter den Schritt f) Strukturieren der Deckschicht aufweist, wobei die Deckschicht bevorzugt mit einer strukturierten Walze eines Prägekalanders erfolgt.

13. Vorrichtung zur Herstellung eines dekorierten Wand- oder Bodenpaneels, **dadurch gekennzeichnet, dass** die Vorrichtung Mittel zum Durchführen des Verfahrens nach einem der Ansprüche 1 bis 12 aufweist.

14. Plattenförmiger Träger für ein dekoriertes Wand- oder Bodenpaneel, hergestellt gemäß einem Verfahren nach einem der Ansprüche 1 bis 12, aufweisend zumindest eine Trägerschicht umfassend die erste Polymermasse und eine die Trägerschicht kontaktierende siegelfähige Schicht umfassend die zweite Polymermasse.

15. Dekorpaneel, hergestellt gemäß einem Verfahren nach einem der Ansprüche 1 bis 12.
